# EUROPEAN PATENT APPLICATION

(11) **EP 4 757 349 A1**
(43) Date of publication of application: **10.06.2026**
(21) Application number: 25220128.0
(22) Date of filing: 02.12.2025
(51) Int. Cl.: H04W 4/021

(54) **SERVER APPARATUS, INFORMATION PROCESSING METHOD, AND SYSTEM**

(30) Priority: 04.12.2024 JP 2024210980
(71) Applicant: Toyota Jidosha Kabushiki Kaisha, Toyota-shi, Aichi-ken 471-8571 (JP)
(72) Inventor: KATO, Shodai, Toyota-shi, 471-8571 (JP)
(74) Representative: D Young & Co LLP

(57) **Abstract**

A system according to an aspect of the present disclosure is constituted of a server apparatus and a client apparatus. The server apparatus is capable of accessing a database of geofence definition data. The geofence definition data is associated with a zone on a map to which a defined geofence belongs. The server apparatus is configured to: receive current position information from the client apparatus; extract geofence definition data associated with at least one of a first zone to which a current position belongs and a second zone that exists in a periphery of the first zone from the database according to the current position information; and return the extracted geofence definition data to the client apparatus.

## Description

### BACKGROUND

### Technical Field

The present disclosure relates to a system, a server apparatus, and an information processing method.

### Description of the Related Art

In recent years, there have been advances in the development of technology to utilize geofences. A geofence is an area enclosed by a virtual boundary. In geofence technology, basically, whether a user (or device) is inside or outside a geofence is determined according to a current position of the user (or device). The inside/outside determination may include a determination of whether the user (or device) has entered the geofence or exited the geofence. Subsequently, according to a result of the inside/outside determination, an arbitrary action is executed. For example, Japanese Translation of PCT International Application Publication No. 2016-528564 proposes a system that acquires a position of a user device, determines whether or not the user device has entered a geofence based on the acquired position, and provides a warning if the user device is determined to have entered the geofence.

### SUMMARY

An object of the present disclosure is to provide a technique for reducing a processing load on a server apparatus with respect to information processing related to geofences.

A system according to a first mode of the present disclosure is constituted of a server apparatus and a client apparatus. The server apparatus is capable of accessing a database of geofence definition data. The geofence definition data is configured to indicate a definition of a geofence and is associated with a zone on a map to which the defined geofence belongs. The client apparatus is configured to execute: acquiring a current position as measured by a positioning module; and transmitting current position information related to the acquired current position to the server apparatus. The server apparatus is configured to execute: receiving the current position information from the client apparatus; extracting geofence definition data associated with at least one of a first zone to which the current position belongs and a second zone that exists in a periphery of the first zone from the database according to the current position information; and returning the extracted geofence definition data to the client apparatus.

A server apparatus according to a second mode of the present disclosure includes a controller and is configured to be capable of accessing a database of geofence definition data. The geofence definition data is configured to indicate a definition of a geofence and is associated with a zone on a map to which the defined geofence belongs. The controller is configured to execute: receiving current position information related to a current position of a client apparatus from the client apparatus; extracting geofence definition data associated with at least one of a first zone to which the current position belongs and a second zone that exists in a periphery of the first zone from the database according to the current position information; and returning the extracted geofence definition data to the client apparatus.

An information processing method according to a third mode of the present disclosure is executed by a server apparatus. The server apparatus is capable of accessing a database of geofence definition data. The geofence definition data is configured to indicate a definition of a geofence and is associated with a zone on a map to which the defined geofence belongs. The information processing method includes: receiving current position information related to a current position of a client apparatus from the client apparatus; extracting geofence definition data associated with at least one of a first zone to which the current position belongs and a second zone that exists in a periphery of the first zone from the database according to the current position information; and returning the extracted geofence definition data to the client apparatus.

According to the present disclosure, a reduction in a processing load on a server apparatus with respect to information processing related to geofences can be expected.

### BRIEF DESCRIPTION OF THE DRAWINGS

Fig. 1 schematically illustrates an example of a situation where the present disclosure is applied;
Fig. 2 schematically illustrates an example of a method of defining a geometry (area) of a geofence according to the present disclosure;
Fig. 3 schematically illustrates an example of a method of defining a geometry (area) of a geofence according to the present disclosure;
Fig. 4 schematically illustrates an example of a method of defining a geometry (area) of a geofence according to the present disclosure;
Fig. 5 schematically illustrates an example of a method of integrating geometries according to the present disclosure;
Fig. 6 schematically illustrates an example of a method of integrating geometries according to the present disclosure;
Fig. 7 schematically illustrates an example of a method of integrating geometries according to the present disclosure;
Fig. 8 schematically illustrates an example of a configuration of geofence definition data according to the present disclosure;
Fig. 9 schematically illustrates an example of a method of associating a geofence with a zone on a map according to the present disclosure;
Fig. 10 schematically illustrates an example of a method of associating a geofence with a zone on a map according to the present disclosure;
Fig. 11 schematically illustrates an example of a situation where geofence definition data held in a client apparatus is updated according to the present disclosure;
Fig. 12 schematically illustrates an example of a situation where a priority set to geofence definition data is utilized according to the present disclosure;
Fig. 13 schematically illustrates an example of a hardware configuration of a server apparatus according to the present disclosure;
Fig. 14 schematically illustrates an example of a hardware configuration of a client apparatus according to the present disclosure;
Fig. 15 schematically illustrates an example of a software configuration of a server apparatus according to the present disclosure;
Fig. 16 schematically illustrates an example of a software configuration of a client apparatus according to the present disclosure;
Fig. 17 is a sequence diagram illustrating an example of a processing procedure related to a request and provision of geofence definition data according to the present disclosure; and
Fig. 18 is a flow chart illustrating an example of a processing procedure related to an inside/outside determination of a geofence according to the present disclosure.

### DESCRIPTION OF THE EMBODIMENTS

Executing determination processing of a geofence in each client apparatus by a server apparatus increases a processing load on the server apparatus. Therefore, in order to reduce the processing load on the server apparatus, a configuration in which the determination processing of a geofence is executed by each client apparatus can be adopted. For example, Japanese Translation of PCT International Application Publication No. 2018-507568 proposes a system in which a server apparatus delivers definition data of a geofence that exists within a predetermined range (threshold distance range) from a current position of a client apparatus to each client apparatus, and each client apparatus executes determination processing of the geofence according to the delivered definition data. However, in this system, the server apparatus calculates a distance between an object geofence and a current position of a client apparatus, compares the calculated distance with a threshold, and, according to a result of the comparison, determines whether or not to deliver definition data of the object geofence to the client apparatus. As the number of geofences and the number of client apparatuses respectively increase, the calculation of the distance accumulates. Accordingly, the processing load on the server apparatus may increase.

In contrast, the system according to the first mode of the present disclosure is constituted of a server apparatus and a client apparatus. The server apparatus is capable of accessing a database of geofence definition data. The geofence definition data is configured to indicate a definition of a geofence and is associated with a zone on a map to which the defined geofence belongs. The client apparatus is configured to execute: acquiring a current position as measured by a positioning module; and transmitting current position information related to the acquired current position to the server apparatus. The server apparatus is configured to execute: receiving the current position information from the client apparatus; extracting geofence definition data associated with at least one of a first zone to which the current position belongs and a second zone that exists in a periphery of the first zone from the database according to the current position information; and returning the extracted geofence definition data to the client apparatus.

In the first mode of the present disclosure, a map is divided into zones and the geofence definition data is associated with a zone to which the defined geofence belongs. In other words, the geofence definition data is managed on a per-zone basis on the map. Accordingly, the server apparatus can extract the geofence definition data to be delivered to the client apparatus in accordance with zones (first zone and second zone) without having to calculate a distance between the current position of the client apparatus and the geofence. Therefore, according to the first mode of the present disclosure, a reduction in a processing load on the server apparatus with respect to information processing related to geofences can be expected.

Note that the form of the present disclosure need not be limited to the system described above. As another form of the system according to the mode described above, an aspect of the present disclosure may be any of an information processing apparatus (server apparatus or client apparatus) that realizes all of or part of each component described above, an information processing method, a program, or a storage medium readable by a machine such as a computer that stores such a program. In this case, the storage medium readable by a machine may be a non-transitory medium that accumulates information such as programs by an electrical action, a magnetic action, an optical action, a mechanical action, or a chemical action. The non-transitory storage medium may include a storage medium (CD, DVD, semiconductor memory, or the like), an auxiliary storage apparatus of a computer, or an external main memory connected to a computer.

For example, the server apparatus according to the second mode of the present disclosure may include a controller and may be configured to be capable of accessing a database of geofence definition data. The geofence definition data may be configured to indicate a definition of a geofence and may be associated with a zone on a map to which the defined geofence belongs. The controller may be configured to execute: receiving current position information related to a current position of a client apparatus from the client apparatus; extracting geofence definition data associated with at least one of a first zone to which the current position belongs and a second zone that exists in a periphery of the first zone from the database according to the current position information; and returning the extracted geofence definition data to the client apparatus.

In addition, for example, the information processing method according to the third mode of the present disclosure may be executed by a server apparatus. The server apparatus may be capable of accessing a database of geofence definition data. The geofence definition data may be configured to indicate a definition of a geofence and may be associated with a zone on a map to which the defined geofence belongs. The information processing method may include: receiving current position information related to a current position of a client apparatus from the client apparatus; extracting geofence definition data associated with at least one of a first zone to which the current position belongs and a second zone that exists in a periphery of the first zone from the database according to the current position information; and returning the extracted geofence definition data to the client apparatus.

Hereinafter, an embodiment according to an aspect of the present disclosure will be described based on the drawings. However, note that the present embodiment described below is in all respects merely illustrative of the present disclosure. Various improvements or modifications may be made without departing from the scope of the present disclosure. In implementing the present disclosure, specific configurations in accordance with embodiments may be adopted as appropriate. Although the data appearing in the present embodiment is described by natural language, more specifically, the data is designated by pseudo-language, commands, parameters, machine language, electrical signals, and the like which can be recognized by computers and other machines.

### [1 Example of application]

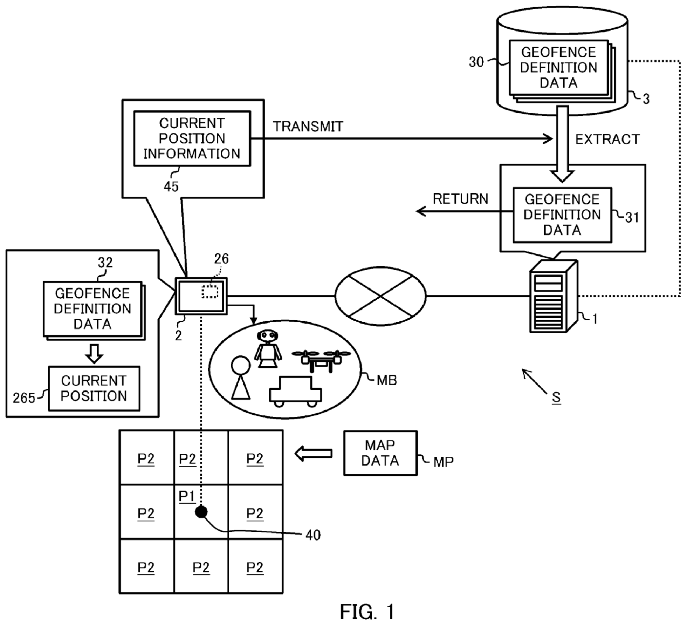

Fig. 1 schematically illustrates an example of a situation where the present disclosure is applied. A system S according to the present embodiment is constituted of a server apparatus 1 and a client apparatus 2.

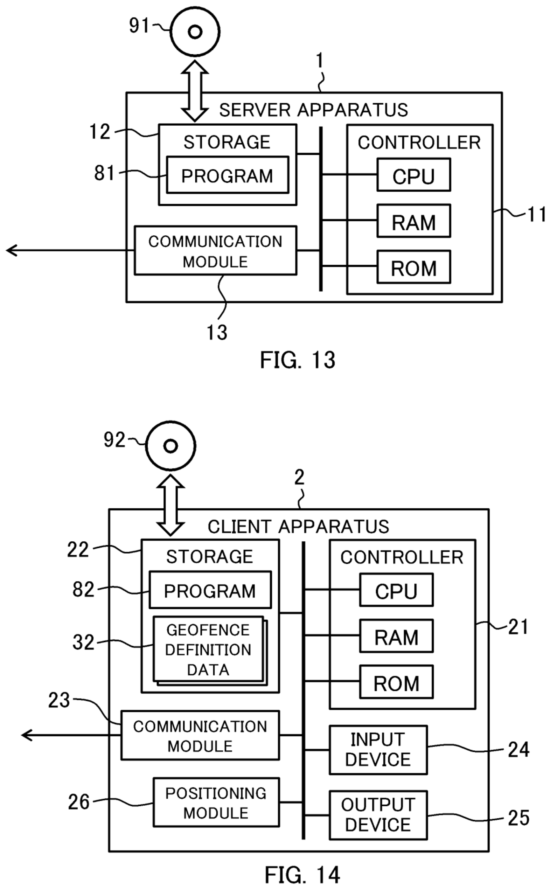

The server apparatus 1 is configured to be capable of accessing a database 3 of geofence definition data 30. The database 3 may be held in any storage area. In one example, the database 3 may be stored in a memory resource of the server apparatus 1. Accordingly, the server apparatus 1 may be configured to be capable of accessing the database 3. In another example, the database 3 may be stored in an external main memory such as a main memory of another computer. The main memory of another computer may include a network attached storage (NAS). In this case, the server apparatus 1 may be configured to be capable of connecting to the external main memory via a network or the like by including a module (a communication module 13 in Fig. 13 or the like) for connecting to the external main memory. A connection method need not be particularly limited and may be selected as appropriate in accordance with the embodiment. Accordingly, the server apparatus 1 may be configured to be capable of accessing the database 3 held in the external main memory. The geofence definition data 30 is configured to indicate a definition of a geofence. A map is divided into a plurality of zones in advance. The geofence definition data 30 is associated with a zone on the map to which the defined geofence belongs.

The client apparatus 2 is configured to be capable of acquiring a current position as measured by a positioning module 26. In one example, the client apparatus 2 may have the positioning module 26 provided inside (in other words, built in). In another example, the client apparatus 2 may be directly or indirectly connected to the positioning module 26 deployed outside. Being indirectly connected may be constituted of being connected via a network (such as a controller area network), another computer, or the like. The client apparatus 2 acquires a current position 40 as measured by the positioning module 26. The client apparatus 2 transmits current position information 45 related to the acquired current position 40 to the server apparatus 1. Accordingly, the client apparatus 2 requests the server apparatus 1 to provide geofence definition data in accordance with the current position 40.

The server apparatus 1 is configured to provide geofence definition data 31 in response to a request from the client apparatus 2. In the present embodiment, the server apparatus 1 receives the current position information 45 from the client apparatus 2. In accordance with the current position information 45, the server apparatus 1 extracts the geofence definition data 31 associated with at least one of a first zone P1 to which the current position 40 belongs and a second zone P2 that exists in a periphery of the first zone P1 from the database 3 (geofence definition data 30). The server apparatus 1 returns the extracted geofence definition data 31 to the client apparatus 2.

The client apparatus 2 may update geofence definition data 32 held therein with the received geofence definition data 31. When there is no existing geofence definition data 32 being held, the client apparatus 2 may save the geofence definition data 31 received from the server apparatus 1 as the geofence definition data 32 as it is. When there is existing geofence definition data 32, the client apparatus 2 may update the held geofence definition data 32 by adding the geofence definition data 31 received from the server apparatus 1.

The client apparatus 2 may acquire a current position 265 as measured by the positioning module 26 at any timing. The client apparatus 2 may determine whether the acquired current position 265 is inside or outside a corresponding geofence according to the held geofence definition data 32. The determination of the geofence may be executed continuously. When the determination of the geofence is executed continuously, the client apparatus 2 may further determine a transition state of an object with respect to the geofence according to a previous determination result and a current determination result. A type of the transition state may be defined as appropriate in accordance with the embodiment. In one example, the type of the transition state may include at least one of staying outside the geofence, entering the geofence from outside, staying inside the geofence, and exiting the geofence to the outside. Note that, in the following description, determining whether the current position 265 is inside or outside a geofence will also be referred to as an "inside/outside determination of a geofence". The inside/outside determination of a geofence will also be simply referred to as "determination of a geofence".

As described above, in the present embodiment, a map is divided into zones and the geofence definition data 30 is associated with a zone to which the defined geofence belongs. In other words, the geofence definition data 30 is managed on a per-zone basis on the map. Accordingly, the server apparatus 1 can extract the geofence definition data 31 to be delivered to the client apparatus 2 in accordance with zones (first zone P1 and second zone P2) without having to calculate a distance between the current position 40 of the client apparatus 2 and the geofence. Therefore, according to the present embodiment, a reduction in the processing load on the server apparatus 1 with respect to information processing regarding geofences can be expected.

### [Map/zones]

A map (map data MP) can be given as appropriate. The map data MP may be configured as appropriate to show a map. A known configuration may be adopted as a configuration of the map data MP. In one example, the map data MP may be configured to include coordinate information of latitude and longitude, road network information, facility information, and the like. Road network information may include an ID (road link ID) of each road (road link). The map data MP may be held in any storage area. The map data MP may be stored in at least one of a memory resource of the server apparatus 1, a memory resource of the client apparatus 2, and an external main memory.

In the client apparatus 2, the map data MP may be used for any purpose such as displaying a designated area or a designated location or route guidance. When the map data MP is not held in advance and the map data MP is to be used for any purpose, the client apparatus 2 may acquire at least data of a range to be used in the map data MP from at least one of the server apparatus 1 and the external main memory using any method. A known method may be adopted as the method of acquiring the map data MP. In the client apparatus 2, determination processing of a geofence may be executed in conjunction with processing of using the map data MP or may be executed independently of the processing of using the map data MP.

Each zone may be specified as appropriate in accordance with the embodiment. A method of dividing the map need not be particularly limited and may be selected as appropriate in accordance with the embodiment. As illustrated in Fig. 1, in one example, each zone may be formed by dividing the map into a mesh. A shape of each of the zones (first zone P1 and second zone P2) may be rectangular. However, the shape of each zone need not be limited to such an example and may be selected as appropriate in accordance with the embodiment. Any shape other than a rectangle may be adopted as the shape of each zone. The map may be divided by a method other than a mesh. In addition, each zone may be managed as appropriate. In one example, each zone may be assigned identification information (zone ID). Each zone may be identified by the assigned zone ID. Information of each zone may include information indicating a coordinate range together with the zone ID. Information of each zone may be managed in the map data MP or managed independent of the map data MP. The map data MP need not necessarily be given as long as each zone is managed so that when the current position 40 is given, the zone (first zone P1) to which the current position 40 belongs can be specified.

### [Current position information]

As long as the current position information 45 includes information that enables the first zone (first zone P1) to which the current position 40 belongs and the second zone (second zone P2) in a periphery of the first zone (first zone P1) to be specified, the configuration of the current position information 45 need not be particularly limited and may be determined as appropriate in accordance with the embodiment.

In one example, the current position information 45 may be configured to indicate the current position 40. In this case, the server apparatus 1 may specify the first zone and the second zone according to the current position 40 indicated by the current position information 45.

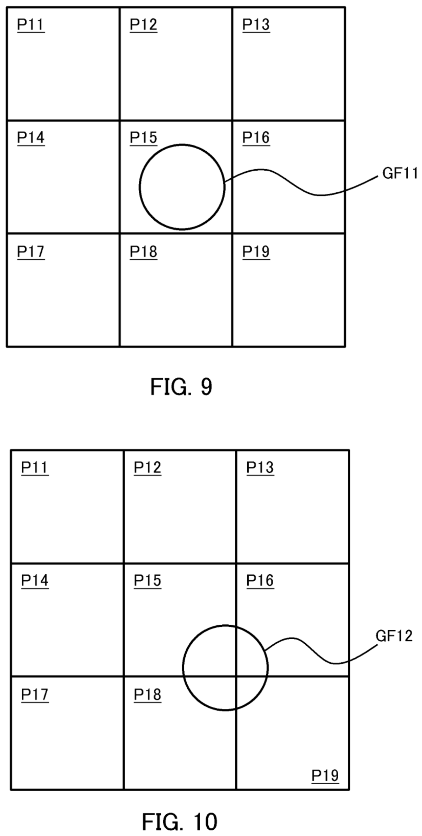

In another example, when the client apparatus 2 is capable of accessing information of each zone, the first zone to which the current position 40 belongs may be specified by the client apparatus 2. The current position information 45 may be configured to indicate the first zone. For example, the current position information 45 may be configured to include at least one of a zone ID of the first zone and information indicating a coordinate range of the first zone. The coordinate range may be expressed in any way. For example, when the zone is formed in a rectangle as exemplified in Fig. 1 (Figs. 9 and 10 to be described later), the coordinate range may be expressed by coordinate pairs of vertices arranged diagonally such as a bottom left vertex and a top right vertex. In this case, the server apparatus 1 may comprehend the first zone to which the current position 40 belongs according to the current position information 45 received from the client apparatus 2. In addition, the server apparatus 1 may specify the second zone in a periphery of the first zone from the first zone indicated by the current position information 45.

In another example, the client apparatus 2 may further specify at least a part of the second zone in the periphery. The current position information 45 may be configured to indicate at least a part of the second zone and the first zone. For example, the current position information 45 may be configured to include at least one of zone IDs of the first zone and the second zone and information indicating a coordinate range of the first zone and the second zone. The coordinate range may collectively express the first zone and the second zone or individually express each zone. In this case, the server apparatus 1 may comprehend the first zone to which the current position 40 belongs and at least a part of the second zone in the periphery of the first zone according to the current position information 45 received from the client apparatus 2. When the client apparatus 2 specifies a part of the second zone, the server apparatus 1 may specify a remainder of the second zone based on the first zone and the part of the second zone indicated by the current position information 45.

Note that the current position 40 may be the position as measured by the positioning module 26 as it is, a position obtained by correcting a measurement result of the positioning module 26 in any way, or a position predicted from the measurement result of the positioning module 26. A similar description applies to the current position 265. In addition, the positioning module 26 may be deployed to measure a position of any object (including a person). In one example, the positioning module 26 may measure a current position of the client apparatus 2 itself by being deployed in the client apparatus 2. In another example, the positioning module 26 may measure a current position of an object (such as a mobile object MB) other than the client apparatus 2 by being deployed in the object. The current position 40 of the client apparatus 2 may include a current position of the object other than the client apparatus 2.

In addition, in the example in Fig. 1, eight second zones (second zones P2) exist in the periphery of the first zone (first zone P1). Each second zone is defined as an adjacent zone having moved by one zone in each direction from the first zone. However, the definition of the second zone (in other words, a range of the periphery) need not be limited to such an example and may be modified as appropriate in accordance with the embodiment. The second zone may include a zone that is not directly adjacent to the first zone. For example, the second zone may include a zone having moved by two or more zones in one direction from the first zone.

### [Geofence]

A geofence is an area enclosed by a virtual boundary set on a map. Any action can be executed in response to a detection of an event with respect to the area such as entry to the area. Therefore, in one example, a geofence may be defined by a geometry that demarcates the area (geographical range) and an action related to the area.

### (Geometry)

A method of defining a geometry need not be particularly limited and may be selected as appropriate in accordance with the embodiment. A known method may be adopted as the method of defining a geometry. Information on a geometry may include any information for demarcating an area (geographical range).

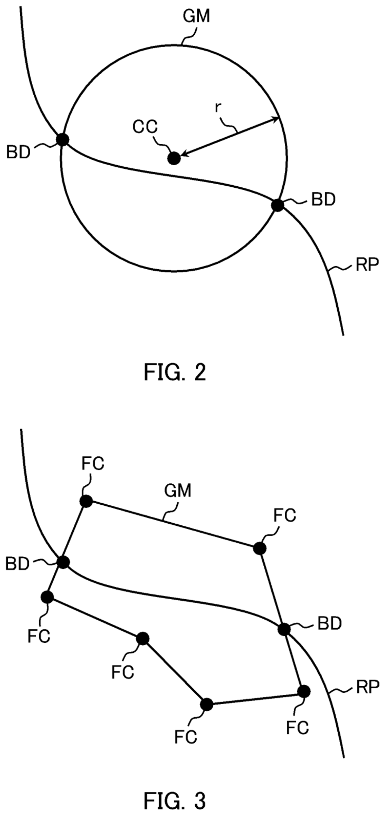

Figs. 2, 3, and 4 schematically illustrate an example of a method of defining a geometry GM (area) of a geofence according to the present embodiment. In one example, as illustrated in Fig. 2, the geometry GM may be defined by a center coordinate CC and a radius r. In this case, an area of the geofence may be demarcated as a circular range with a radius of r from the center coordinate CC. A circumference of the circle with the radius r centered on the center coordinate CC is the boundary of the area of the geofence. When a passage RP is given, a boundary of the geofence on the passage RP is an intersection BD of the boundary of the geofence and the passage RP. Note that the passage RP may be given by any method. For example, the passage RP may be a road, a sea route, or an air route. The passage RP may be given realistically in a real space or given virtually. The passage RP may be omitted.

In one example, as illustrated in Fig. 3, the geometry GM may be defined by a sequence of coordinates of feature points FC. In this case, an area of the geofence may be demarcated as a range of a closed polygon formed by connecting adjacent feature points FC to each other. A line connecting each feature point FC is the boundary of the area of the geofence. The passage RP and the boundary (intersection BD) are similar to the example in Fig. 2. Note that six feature points FC are specified in the one example in Fig. 3. However, the number of feature points FC need not be limited to such an example and may be selected as appropriate in accordance with the embodiment. The number of feature points FC may be any number equal to three or more.

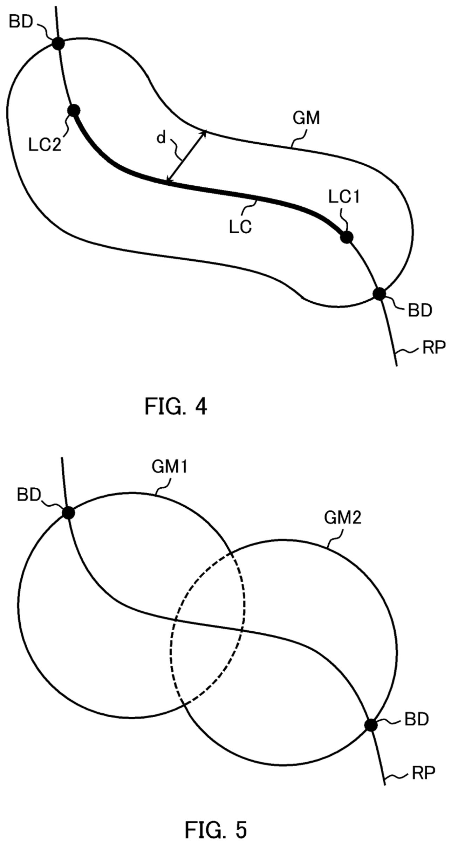

In one example, as illustrated in Fig. 4, the geometry GM may be defined by a link LC and a distance d from the link LC. In this case, an area of the geofence may be demarcated as a range with a capsule shape at the distance d from the link LC. An outer periphery of the capsule shape at the distance d from the link LC is the boundary of the area of the geofence. The passage RP and the boundary (intersection BD) are similar to the example in Fig. 2. Note that the link LC may be specified as appropriate. The link LC may be given as the passage RP such as a road link or given independently of the passage RP. Information on the link LC may be configured as appropriate. For example, the information on the link LC may include identification information such as a link ID. Range information indicating a range of the link LC may be held in any storage area in association with the identification information. Accordingly, the information on the link LC may be configured to indirectly indicate the range of the link LC. In addition, for example, the information on the link LC may be configured to directly indicate the range of the link LC by including the range information described above. For example, the range of the link LC may be specified by end points (LC1, LC2). Each of the end points (LC1, LC2) may be referred to as a start point or an end point. According to the example of the geometry GM, increasing a width of the link LC by the distance d makes the determination processing of the geofence (detection of an event with respect to the area) easier as compared to when the geofence is solely constituted of the link LC.

### (Integration of geometry)

An area of a geofence may be demarcated by one geometry or demarcated by a plurality of geometries. When an area is to be demarcated by a plurality of geometries, the plurality of geometries may be integrated (combined) as appropriate. A method of integrating geometries need not be particularly limited and may be selected as appropriate in accordance with the embodiment. In one example, integration of geometries may be defined by a logical operator such as a logical disjunction, a logical conjunction, and an exclusive disjunction.

Fig. 5 schematically illustrates an example (logical disjunction) of a method of integrating geometries (GM1 and GM2) according to the present embodiment. In Fig. 5, a situation is envisioned where a logical disjunction is adopted as a logical operator used to integrate the two geometries (GM1 and GM2). In this case, an area of a geofence is demarcated as an area including at least one of the geometry GM1 and the geometry GM2. When the current position (current position 265) belongs to the area of at least one of the geometry GM1 and the geometry GM2, the current position (current position 265) is determined to be inside the geofence. When the current position does not belong to the areas of both the geometry GM1 and the geometry GM2, the current position is determined to be outside the geofence. When a passage RP is given as illustrated in Fig. 5, a boundary of the geofence on the passage RP is the two intersections BD of an outer periphery (boundary) after combining the respective geometries (GM1 and GM2) and the passage RP.

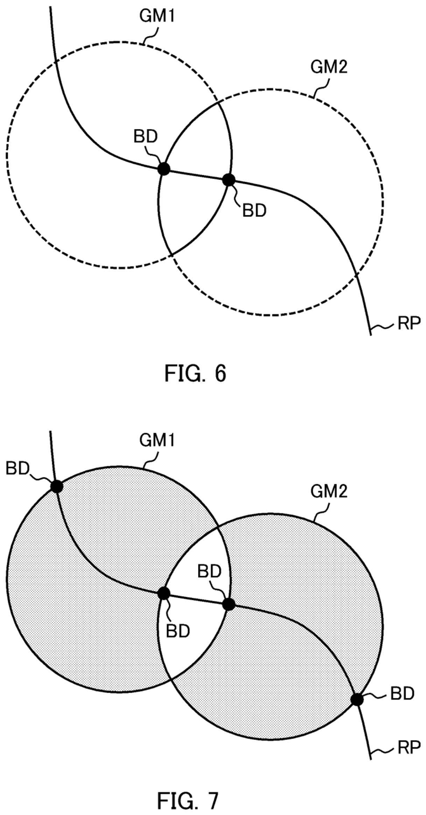

Fig. 6 schematically illustrates an example (logical conjunction) of a method of integrating geometries (GM1 and GM2) according to the present embodiment. In Fig. 6, a situation is envisioned where a logical conjunction is adopted as a logical operator used to integrate the two geometries (GM1 and GM2). In this case, an area of a geofence is demarcated as an area where the geometry GM1 and the geometry GM2 overlap with each other. When the current position belongs to the areas of both the geometry GM1 and the geometry GM2, the current position is determined to be inside the geofence. When the current position belongs to the area of only one of the geometry GM1 and the geometry GM2 or does not belong to the areas of both the geometry GM1 and the geometry GM2, the current position is determined to be outside the geofence. When a passage RP is given as illustrated in Fig. 6, a boundary of the geofence on the passage RP is the two intersections BD of an outer periphery of an overlapping range of the two geometries (GM1 and GM2) and the passage RP.

Fig. 7 schematically illustrates an example (exclusive disjunction) of a method of integrating geometries (GM1 and GM2) according to the present embodiment. In Fig. 7, a situation is envisioned where an exclusive disjunction is adopted as a logical operator used to integrate the two geometries (GM1 and GM2). In this case, an area of a geofence is demarcated as the area of only one of the geometry GM1 and the geometry GM2. When the current position belongs to the area of only one of the geometry GM1 and the geometry GM2, the current position is determined to be inside the geofence. When the current position belongs to the area where the geometry GM1 and the geometry GM2 overlap with each other or does not belong to any area, the current position is determined to be outside the geofence. When a passage RP is given as illustrated in Fig. 7, a boundary of the geofence on the passage RP is the two intersections BD of the boundaries of the respective geometries (GM1 and GM2) and the passage RP and the two intersections BD of an outer periphery of an overlapping range of the two geometries (GM1 and GM2) and the passage RP.

### (Action)

A method of defining an action need not be particularly limited and may be selected as appropriate in accordance with the embodiment. A known method may be adopted as the method of defining an action. In one example, an action may be defined by an execution content (action content) and an execution condition (action execution condition). In other words, an action may be defined to give "when" (execution condition) and "what" (execution content) to be executed with respect to the geographic range (geometry) being set.

### (A) Action content

An action content may be determined as appropriate in accordance with the embodiment such as a situation, an object, and the like of using a geofence. The action content may include, for example, controlling an operation of an apparatus, generating information, and outputting information. The apparatus to be controlled may be the client apparatus 2 itself or any apparatus connected to the client apparatus 2. Controlling an operation of the apparatus may include, for example, operating the apparatus in a specific mode among a plurality of modes, causing the apparatus to execute a predetermined operation, allowing the apparatus to execute a predetermined operation, and prohibiting the apparatus from executing a predetermined operation. Generating information may include, for example, generating information to be notified to an external computer. Outputting information may include, for example, presenting information to a user and transmitting information to an external computer.

As illustrated in Fig. 1, in one example, the client apparatus 2 may be deployed in the mobile object MB. A type of the mobile object MB need not be particularly limited as long as the mobile object MB is movable and may be selected as appropriate in accordance with the embodiment. The mobile object MB may be, for example, a person, a vehicle, a flying object, a ship, or a robot apparatus. The vehicle may include a manually operated vehicle and an autonomous vehicle. The vehicle may be selected from, for example, a motorcycle, a three-wheeled vehicle, and a four-wheeled vehicle. A power source of the vehicle may be selected from, for example, electricity and fuel. When the vehicle is an automobile, a size of the vehicle may be selected from large, mid-size, semi-mid-size, standard, special large, special small, and the like. When the vehicle is a motorcycle, a size of the vehicle may be selected from large, standard, and the like. The flying object may include a drone. When the mobile object MB is a person, the client apparatus 2 may be any computer carried by the person. When the mobile object MB is an apparatus such as a vehicle, a flying object, a ship, or a robot apparatus, the client apparatus 2 may be an arbitrary computer deployed on the apparatus at least on a temporary basis. For example, when the mobile object MB is a vehicle, the client apparatus 2 may be an in-vehicle apparatus that is mounted to the vehicle or a terminal device (such as a user terminal) that is temporarily deployed in the vehicle when the user uses the vehicle. The client apparatus 2 may be a computer that constitutes at least a part of the mobile object MB or a computer to be connected to the mobile object MB. In addition, the client apparatus 2 may be deployed outside the mobile object MB and configured to control operations of the mobile object MB. In this case, the positioning module 26 may be deployed on the mobile object MB. When the client apparatus 2 is deployed inside or outside the mobile object MB, the action content may include any action content related to the mobile object MB.

For example, when the mobile object MB is a vehicle, a geofence may be provided in a low-emission zone. The vehicle may be a hybrid vehicle. In this case, when the vehicle enters the geofence and an operating mode of the vehicle is a hybrid mode, the action content may include switching the operating mode of the vehicle from the hybrid mode to an EV (electric vehicle) mode. In addition, for example, when at least one of the vehicle and the client apparatus 2 is provided with an imaging apparatus, the action content may include prohibiting imaging by the imaging apparatus. Furthermore, for example, the action content may include notifying an external computer (server or the like) of a movement status of the vehicle. The movement status of the vehicle may include, for example, approaching a destination, having reached the destination, staying at the destination, and having departed the destination. In one example, the vehicle may be a truck delivering a package and the destination may be a delivery destination of the package (such as a store). In addition, for example, the action content may include outputting an advertisement to at least one of an output device of the client apparatus 2 (output device 25 in Fig. 14) and an external output apparatus. For example, the external output apparatus may be an output apparatus (display, speaker, or the like) deployed in the vehicle separately from the client apparatus 2. The advertisement may include information on a coupon for discounts at eligible stores.

Note that the number of executions of actions specified in the action content may be one or a plurality. When a plurality of actions are defined in the action content, each action may be referred to as a sub-action. The action content may be defined by a combination of a plurality of sub-actions. When the action content is defined by a combination of a plurality of sub-actions, an order of priority of execution may be set to each sub-action. In addition, a dependence relationship of executions may exist between at least a part of the sub-actions such as when whether or not a second sub-action is to be executed or an execution content of the second sub-action is to be determined according to an execution result of a first sub-action.

In addition, the action content may be determined statically in advance or determined dynamically according to predetermined conditions. A dynamic determination of the action content may be performed, for example, based on various conditions such as a time slot, a date, weather, the presence or absence of an event, a state of the user, and a state of an apparatus (client apparatus 2, mobile object MB, vehicle, or the like). As one example, the action content may be defined so that advertisements are output according to time slots (such as outputting an advertisement of a cafe during a morning time slot and outputting an advertisement of a restaurant during a night time slot).

### (B) Action execution condition

An action execution condition is a condition for determining whether or not to execute an action. The action execution condition may be defined as appropriate so as to include a condition related to an event with respect to an object geofence. An event with respect to a geofence may be detected as appropriate according to a result of an inside/outside determination of the geofence. In one simple example, a condition related to an event with respect to a geofence may include at least one of being positioned inside the geofence and being positioned outside the geofence. A transition of a positional relationship with respect to the geofence may be monitored by continuously executing inside/outside determinations of the geofence. Accordingly, in one example, a condition related to an event with respect to the geofence may be detected according to a result of monitoring the transition of the positional relationship with respect to the geofence. For example, an event with respect to the geofence may include at least one of staying outside the geofence, entering the geofence from outside, staying inside the geofence, and exiting the geofence to the outside. Staying inside (outside) the geofence may include at least one of staying inside (outside) the geofence beyond a predetermined time and performing a predetermined movement inside (outside) the geofence.

The action execution condition may further include any condition other than the condition related to an event with respect to the geofence. In one example, the action execution condition may further include a condition related to an execution environment of an action. The execution environment may include any element of the circumstances under which the action is to be executed. For example, the execution environment may include dynamic elements such as a time slot, a date, weather, and the presence or absence of any event. In addition, in one example, the action execution condition may further include at least one of a condition related to a state of an apparatus and a condition related to a state of a user of the apparatus. The apparatus may be the client apparatus 2 itself or any apparatus connected to the client apparatus 2. The apparatus may be the mobile object MB. When determining whether or not any of the conditions is satisfied, the client apparatus 2 may acquire information used for the determination as appropriate from any information source. For example, when the action execution condition includes a condition related to the state of an apparatus, the client apparatus 2 may determine whether or not the condition related to the state of an apparatus is satisfied according to at least one of information held in the client apparatus 2 or information acquired from another apparatus connected to the client apparatus 2. The other apparatus may include a computer connected via a network such as an external server. The other apparatus may include various sensors such as an in-vehicle sensor. A similar description applies when the action execution condition includes a condition related to the state of a user.

As an example, in the case described above where the client apparatus 2 is deployed in a vehicle, the action execution condition may further include a condition related to a state of the vehicle and the client apparatus 2 may determine whether or not the condition related to the state of the vehicle is satisfied according to vehicle information obtained from the vehicle. For example, with respect to a geofence related to a low-emission zone, the condition related to the state of the vehicle may include the vehicle being in a hybrid mode. Accordingly, when the vehicle is in an EV mode even before entering the geofence, the client apparatus 2 may determine that the action execution condition is not satisfied and may omit execution of an action to switch the operating mode of the vehicle to the EV mode. In addition, for example, the condition related to the state of a vehicle (including the client apparatus 2) may include the imaging apparatus being started up. Accordingly, when the imaging apparatus has been stopped even before entering the geofence, the client apparatus 2 may determine that the action execution condition is not satisfied and may omit execution of an action to prohibit imaging by the imaging apparatus. Furthermore, for example, the condition related to the state of a vehicle (including the client apparatus 2) may include an utterance by an application other than an application of an action to be executed not being executed. Accordingly, when an utterance by the other application is being executed, the client apparatus 2 may determine that the action execution condition is not satisfied and may omit execution of the action. In response to the termination of the utterance by the other application, the client apparatus 2 may determine that the action execution condition is satisfied and may execute the action defined in the action content.

Note that once the action execution condition is satisfied, the action defined in the action content may be executed at any timing. In one example, the action may be executed immediately upon fulfillment of the action execution condition or may be executed after a predetermined delay time has elapsed. In addition, the number of the action to be executed in response to the fulfillment of the action execution condition need not be particularly limited and may be determined as appropriate in accordance with the embodiment. In one example, the action may be executed only once or may be repeatedly executed under predetermined conditions.

One or more conditions may be defined in the action execution condition. The action execution condition may be constituted of a combination of a plurality of conditions. When the action execution condition is constituted of a combination of a plurality of conditions, the action execution condition may be determined to be satisfied upon the fulfillment of any condition included in the action execution condition. In one example, the action execution condition may be determined to be satisfied upon the fulfillment of any condition or the fulfillment of all of at least two or more conditions. An order of priority may be set to each condition. The order of priority may be set statically or set dynamically according to the execution environment or the like. In this case, determination processing of each condition may be executed according to the order of priority. The action execution condition may be referred to as a trigger event.

### [Geofence definition data]

As long as the geofence definition data 30 (31 and 32) is configured so as to define a geofence (geometry and action), a configuration thereof need not be particularly limited and may be determined as appropriate in accordance with the embodiment. In one example, the geofence definition data 30 may be configured to include both information on a geometry and information on an action.

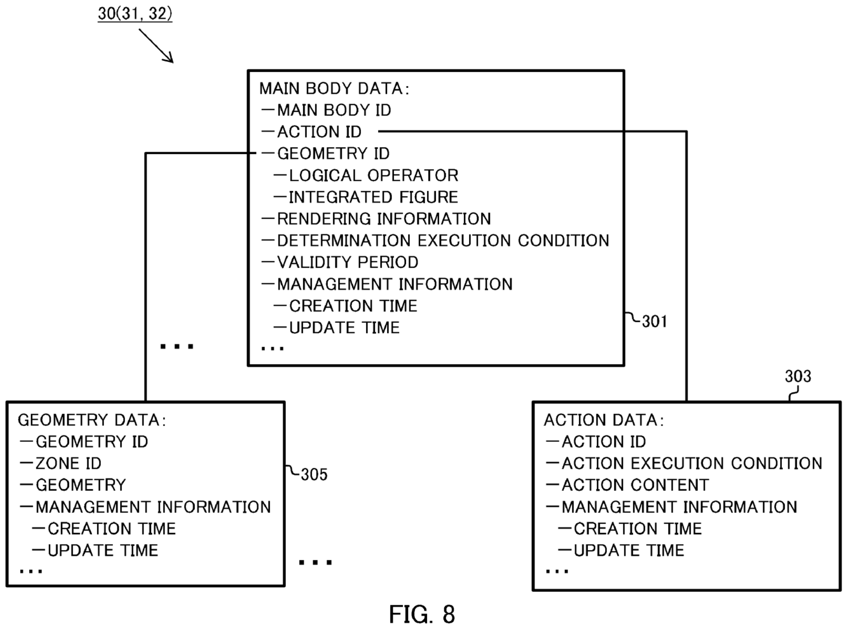

Fig. 8 schematically illustrates an example of a configuration of the geofence definition data 30 (31 and 32) according to the present embodiment. In one example, the geofence definition data 30 (31 and 32) may include action data 303 that specifies an action in a geofence and main body data 301 that includes identification information (action ID) of the action data 303. Due to the main body data 301 including the identification information of the action data 303, the action data 303 is associated with the main body data 301. As the number of geofences increases, a data volume of the geofence definition data 30 (31 and 32) can grow. In contrast, in one example of the present embodiment, the geofence definition data 30 (31 and 32) is divided into the main body data 301 and the action data 303. In other words, the action data 303 is separated from the main body data 301. Accordingly, the action data 303 is configured to be reusable. In other words, by also associating the action data 303 with another piece of main body data, a same action defined by the action data 303 can be set for another geofence. Therefore, according to one example of the present disclosure, since duplication of data with respect to the definition of a same action can be suppressed, a reduction in data volume with respect to the geofence definition data 30 (31 and 32) can be achieved. The reduction in data volume can be facilitated by increasing a reutilization rate.

In addition, in one example, the geofence definition data 30 (31 and 32) may further include geometry data 305 that specifies a geometry that demarcates an area of a geofence. The main body data 301 may further include identification information (geometry ID) of the geometry data 305. Due to the main body data 301 including the identification information of the geometry data 305, the geometry data 305 is associated with the main body data 301. In one example of the present embodiment, the geometry data 305 is also separated from the main body data 301 in a similar manner to the action data 303. Accordingly, the geometry data 305 is also configured to be reusable. In other words, by associating the geometry data 305 with another piece of main body data, a same area definition (geometry) specified by the geometry data 305 can also be applied to another geofence. Therefore, according to one example of the present embodiment, when setting a plurality of geofences to a same area, duplication of data with respect to the same area definition can be suppressed. Consequently, a reduction in data volume with respect to the geofence definition data 30 (31 and 32) can be achieved.

### (Main body data)

The main body data 301 may be configured as appropriate so as to indicate a geofence. In one example, by including the identification information (action ID and geometry ID) of the action data 303 and the geometry data 305, the main body data 301 may be configured to indicate a definition of the geofence together with the associated action data 303 and the associated geometry data 305. As illustrated in Fig. 8, in one example of the present embodiment, the main body data 301 may include fields for storing various kinds of information such as a main body ID, an action ID, a geometry ID, rendering information, a determination execution condition, a validity period, and management information. An order of the respective fields need not be particularly limited and may be modified as appropriate in accordance with the embodiment. In one example, one piece of main body data 301 may correspond to one geofence.

The main body ID may be used to identify a geofence. The main body ID is an example of identification information of the main body data 301. A data format of the identification information (main body ID) need not be particularly limited and may be determined as appropriate in accordance with the embodiment. A value of the main body ID may be given according to the time at which the geofence was registered by creation of the main body data 301. The time may include a year, a month, and a day. An object unit of the time may be selected arbitrarily. Accordingly, the main body ID may be configured so that a registration order can be determined based on the value of the main body ID.

The action ID is used to identify an action (action data 303) to be applied to the geofence. The action ID is an example of identification information of the action data 303. A data format of the identification information (action ID) of the action need not be particularly limited and may be determined as appropriate in accordance with the embodiment. As illustrated in Fig. 8, in one example of the present embodiment, due to the main body data 301 including an action ID, the action data 303 identified by the action ID may be linked with the main body data 301.

The geometry ID is used to identify a geometry (geometry data 305) to be applied to the geofence. The geometry ID is an example of identification information of the geometry data 305. A data format of the identification information (geometry ID) of the geometry need not be particularly limited and may be determined as appropriate in accordance with the embodiment. As illustrated in Fig. 8, in one example of the present embodiment, due to the main body data 301 including a geometry ID, the geometry data 305 identified by the geometry ID may be linked with the main body data 301.

Here, as described above, in one example, an area of a geofence may be demarcated by one geometry or demarcated by a plurality of geometries (Figs. 5 to 7). Accordingly, including the identification information of the geometry data 305 may be constituted of including the identification information of the geometry data 305 of each of one or more geometries. When including the identification information of the geometry data 305 of each of a plurality of geometries, the main body data 301 may further include a logical operator to be used to integrate the plurality of geometries.

In the example in Fig. 8, one or more geometry IDs may be stored in the geometry ID field of the main body data 301. Accordingly, one or more pieces of geometry data 305 may be linked with the main body data 301. With the main body data 301 including a plurality of geometry IDs, a plurality of geometries may be linked with the main body data 301 and used to demarcate an area of the geofence to be defined. In addition, the main body data 301 may further include a field for storing a logical operator. When the main body data 301 includes a plurality of geometry IDs, the field may store the logical operator used when integrating the geometries corresponding to the respective geometry IDs. Accordingly, the main body data 301 may include a logical operator used when integrating the respective linked geometries.

According to an example of the present embodiment, an area of a geofence can be demarcated using a plurality of pieces of geometry data 305 (plurality of geometries). Accordingly, since reusability of the geometry data 305 can be further improved, a further reduction in data volume can be expected. Furthermore, in addition to simple area definitions according to a single geometry, complex area definitions can be easily generated by a combination of a plurality of geometries.

In one example, as illustrated in Fig. 8, when the integration of a plurality of geometries is allowed, the main body data 301 may further include a field for storing an integrated figure that is formed by integrating the plurality of geometries by a logical operator. Accordingly, when including the geometry ID (identification information) of the geometry data 305 of each of the plurality of geometries, the main body data 301 may further include an integrated figure that is formed by integrating the plurality of geometries. The integrated figure may be used for any purpose such as distance calculation. According to one example of the present embodiment, with the main body data 301 including an integrated figure, a calculation to integrate geometries each time a geofence is used need no longer be executed. As a result, an improvement in efficiency of processing can be expected.

The rendering information is used to render a geofence on a map. In one example of the present embodiment, with the main body data 301 including a field for storing the rendering information, the main body data 301 may further include rendering information for rendering a geofence on a map in the client apparatus 2. As described above, in the client apparatus 2, a map may be used for any purpose such as displaying a designated area or a designated location or route guidance. Map data MP may be used to render a map. The rendering information may include any information to be used to render a geofence on a map. For example, the rendering information may include information such as a representative point (coordinates or the like), a name, and rendering attributes. The rendering attributes may include whether or not to display a geofence, a fill color, a border color, transparency, icon attributes, and the like. The icon attributes may include whether or not to display an icon, content information (storage destination of icon image or the like), and the like. The representative point may be used as a point where an icon is to be displayed. According to one example of the present embodiment, compared to the geometry data 305 that specifies a geometry being separated from the main body data 301, the rendering information is retained in the main body data 301. Accordingly, in the client apparatus 2, even without referring to the geometry data 305, a geofence can be rendered by referring to the rendering information in the main body data 301. Therefore, according to one example of the present embodiment, an improvement in efficiently of processing for rendering a geofence can be expected.

The determination execution condition is used to select whether or not to execute determination processing of a geofence. In one example of the present embodiment, with the main body data 301 including a field for storing the determination execution condition, the main body data 301 may further include a determination execution condition for selecting whether or not to execute a determination of a geofence. While the action execution condition described above specifies whether or not to execute an action according to a result of an inside/outside determination of a geofence or the like after executing the inside/outside determination, the determination execution condition specifies whether or not to execute the inside/outside determination of the geofence in the first place. According to one example of the present embodiment, even without referring to the action data 303 (and geometry data 305), whether or not to execute determination of a geofence can be determined by referring to the determination execution condition in the main body data 301. As a result, an improvement in efficiency of determination processing of a geofence can be expected.

Note that the determination execution condition need not be particularly limited and may be set as appropriate in accordance with the embodiment. The determination execution condition may be set with respect to static information or may be set with respect to dynamic information such as the execution environment described earlier. For example, the static information may include a type of the mobile object MB (such as a vehicle type) and an attribute of a user. For example, the attribute of a user may include an age, gender, and the like of the user. In one example, in the case described above where the client apparatus 2 is deployed in a vehicle, the determination execution condition may specify whether or not to execute an inside/outside determination of a geofence according to vehicle information obtained from the vehicle. In addition, in one example, the determination execution condition may include a hysteresis condition that specifies that after executing the inside/outside determination, a dead zone (hysteresis) of a predetermined distance is set and processing of the inside/outside determination is not performed once again until a movement over the distance is performed. With the determination execution condition including the hysteresis condition, frequent execution of determination processing near a boundary of the geofence can be suppressed.

The validity period indicates a time limit for which the geofence defined by the geofence definition data 30 (31 and 32) is valid. In one example of the present embodiment, with the main body data 301 including a field for storing the validity period, the main body data 301 may further include a validity period of a geofence. According to one example of the present embodiment, a period during which a geofence is to be applied can be designated by the validity period included in the main body data 301. In addition, even without referring to the action data 303 and the geometry data 305, whether or not the geofence is valid can be determined by referring to the validity period in the main body data 301. As a result, an improvement in efficiency of processing of verifying a validity of a geofence can be expected.

The management information may include any information to be used in the operation of the main body data 301. In one example, the management information may include a creation time, an update time, and the like. The times may include a year, a month, and a day. An object unit of the time may be selected arbitrarily. The creation time may indicate the time at which the main body data 301 was created. The update time may indicate the time at which the geofence definition data 30 (31 and 32) was updated. In one example, the update time may be configured to indicate the time at which at least one of the main body data 301, the associated action data 303, and the associated geometry data 305 was updated. Accordingly, in one example of the present embodiment, the main body data 301 may further include an overall update time that indicates the time at which at least one of the main body data 301, the action data 303, and the geometry data 305 was updated. According to one example of the present embodiment, consolidating the update times in the main body data 301 enables whether or not at least one of the main body data 301, the action data 303, and the geometry data 305 has been updated to be determined simply by referring to the main body data 301 without referring to the action data 303 and the geometry data 305. As a result, an improvement in efficiency of processing when determining the presence or absence of an update of the geofence definition data 30 (31 and 32) can be expected. However, the update times included in the main body data 301 need not be limited to such an example and may be modified as appropriate in accordance with the embodiment. In another example, the update time may be configured to indicate the time at which the main body data 301 was updated without indicating the times at which the action data 303 and the geometry data 305 were updated. In yet another example, the main body data 301 may separately include an overall update time and an individual update time of the main body data 301.

With respect to the specific configuration of the main body data 301, components can be omitted, replaced, or added as appropriate in accordance with the embodiment. For example, at least one of the logical operator, the integrated figure, the rendering information, the determination execution condition, the validity period, and the management information may be omitted. The rendering information, the determination execution condition, and the validity period may be held in at least one of the action data 303 and the geometry data 305. At least one of the creation time and the update time may be held separately from the management information. In the management information, at least one of the creation time and the update time may be omitted. The management information may further include information other than the creation time and the update time (for example, a creator, an updater, a deletion time, or a deleter). For example, the main body data 301 may further include other information such as a category of the action, whether or not to be made public, and a type of the client apparatus 2 that is an object to which geofence definition data is to be provided.

### (Action data)

By including definition information of an action, the action data 303 may be configured as appropriate to indicate the defined action. As illustrated in Fig. 8, in one example of the present embodiment, the action data 303 may include fields for storing various kinds of information such as an action ID, an action execution condition, an action content, and management information. An order of the respective fields need not be particularly limited and may be modified as appropriate in accordance with the embodiment. In one example, one piece of action data 303 may correspond to one action definition.

The action ID is used to identify the action data 303. The action execution condition specifies a condition under which an action is to be executed. The action content specifies a content of the action to be executed. The action execution condition and the action content may respectively be defined as described above. The action execution condition and the action content are examples of definition information of an action. The management information may include any information to be used in the operation of the action data 303. The management information of the action data 303 may be configured in a similar manner to the management information of the main body data 301 with the exception of the action data 303 replacing the main body data 301 as an object. In one example, the management information may include a creation time, an update time, and the like. The creation time may indicate the time at which the action data 303 was created. The update time may indicate the time at which the action data 303 was updated.

With respect to the specific configuration of the action data 303, components can be omitted, replaced, or added as appropriate in accordance with the embodiment. For example, the management information may be omitted. At least one of the creation time and the update time may be held separately from the management information. In the management information, at least one of the creation time and the update time may be omitted. The management information may further include information other than the creation time and the update time (for example, a creator, an updater, a deletion time, or a deleter). For example, the action data 303 may further include other information such as a category of the action and a name.

### (Geometry data)

By including definition information of a geometry (information that demarcates an area), the geometry data 305 may be configured as appropriate to indicate the defined geometry. As illustrated in Fig. 8, in one example of the present embodiment, the geometry data 305 may include fields for storing various kinds of information such as a geometry ID, a zone ID, a geometry (definition information), and management information. An order of the respective fields need not be particularly limited and may be modified as appropriate in accordance with the embodiment. In one example, one piece of geometry data 305 may correspond to one geometry definition.

The geometry ID is used to identify the geometry data 305. The geometry (definition information) demarcates an area of the geofence. In one example, the geometry may be defined by the method described above such as a circle (Fig. 2), a polygon (Fig. 3), or a link (Fig. 4). The zone ID is used to identify a zone on a map. The zone ID is an example of identification information of a zone. A data format of the identification information (zone ID) of the zone need not be particularly limited and may be determined as appropriate in accordance with the embodiment. The zone ID stored in the zone ID field is a zone ID of a zone to which the geometry defined by the information in the geometry field belongs. In one example of the present embodiment, with the geometry data 305 including a zone ID, the geofence definition data 30 (31 and 32) may be associated with a zone on the map to which the defined geofence belongs. When the defined geometry belongs to a plurality of zones, a plurality of zone IDs (a zone ID of each of the plurality of zones to which the geometry belongs) may be stored in the zone ID field. The management information may include any information to be used in the operation of the geometry data 305. The management information of the geometry data 305 may be configured in a similar manner to the management information of the main body data 301 with the exception of the object being replaced. In one example, the management information may include a creation time, an update time, and the like. The creation time may indicate the time at which the geometry data 305 was created. The update time may indicate the time at which the geometry data 305 was updated.

With respect to the specific configuration of the geometry data 305, components can be omitted, replaced, or added as appropriate in accordance with the embodiment. For example, the zone ID may be held in other data (such as the main body data 301) and omitted from the geometry data 305. In addition, for example, the management information may be omitted. At least one of the creation time and the update time may be held separately from the management information. In the management information, at least one of the creation time and the update time may be omitted. The management information may further include information other than the creation time and the update time (for example, a creator, an updater, a deletion time, or a deleter). For example, the geometry data 305 may further include other information such as a category of the action and a name.

### (Association of geofence definition data)

The geofence definition data (30 to 32) may be associated as appropriate with one or more zones depending on a positional relationship between the geofence to be defined and each zone. In one example, when the geofence to be defined is included in one zone, corresponding geofence definition data may be associated with the one zone that includes the geofence to be defined. In addition, when the geofence to be defined straddles a plurality of zones, corresponding geofence definition data may be associated with all of the zones that the geofence to be defined straddles.

Figs. 9 and 10 schematically illustrate an example of a method of associating geofences (GF11 and GF12) with each of the zones (P11 to P19) on a map. In the example in Fig. 9, the geofence GF11 is included in the zone P15. In this case, the geofence definition data that defines the geofence GF11 may be associated with the zone P15. In the example in Fig. 10, the geofence GF12 straddles four zones (P15, P16, P18, and P19). In this case, the geofence definition data that defines the geofence GF12 may be associated with all of the four zones (P15, P16, P18, and P19).

Returning to Fig. 8, as described above, in one example of the present embodiment, the area of the geofence may be demarcated by the geometry data 305 (geometry) that is linked with the main body data 301. With the geometry data 305 including a zone ID corresponding to a zone to which the area demarcated by the geometry belongs, the geofence definition data 30 (31 and 32) may be associated with the corresponding zone. When an area of a geofence is demarcated by the integration of a plurality of geometries, the zone to which the demarcated area belongs (zone which the geofence definition data is associated with) may be specified as appropriate from the zones to which the respective geometries belong.

For example, when a plurality of geometries are integrated by a logical disjunction, the area demarcated by the plurality of geometries belongs to all of the zones to which the respective geometries belong. Therefore, the zone to which the demarcated area belongs may be specified by merging values of the zone ID fields of the plurality of pieces of geometry data 305 linked with the main body data 301 (zone IDs included in the respective pieces of geometry data 305).

In addition, when an overlapping range exists in each geometry and a plurality of geometries are integrated by a logical conjunction, the area demarcated by the plurality of geometries belongs to at least one of the overlapping zones among the zones to which the respective geometries belong. Therefore, the zone to which the demarcated area belongs may be specified from overlapping zone IDs among zone IDs included in the plurality of pieces of geometry data 305 linked with the main body data 301. The zone to which the overlapping range of each geometry belongs may be specified by any method.

In addition, when an overlapping range exists in each geometry and a plurality of geometries are integrated by an exclusive disjunction, the area demarcated by the plurality of geometries may not belong to at least one of the overlapping zones among the zones to which the respective geometries belong. Specifically, when each geometry together completely includes the object area, the area demarcated by integration by the exclusive disjunction will not belong to the object area. Therefore, the zone to which the demarcated area belongs may be specified from zone IDs included in the plurality of pieces of geometry data 305 linked with the main body data 301 by excluding zone IDs of the zones to which the demarcated area no longer belongs due to the integration by the exclusive disjunction. The zone to which the demarcated area no longer belongs due to the integration by the exclusive disjunction (zone to be excluded) may be specified by any method.

For example, if at least one of a logical conjunction and an exclusive disjunction is used, the zone to which the demarcated area belongs (zone ID) may be specified by integrating each geometry with the logical operator and collating the area demarcated by the integration with the coordinate range of each zone. In addition, in one example, the zone ID of a zone to which an area (integrated figure) demarcated by integrating each geometry belongs may be held in the main body data 301 or the like in a similar manner to the integrated figure. In this case, the zone to which the area after integration belongs can be specified by the zone ID held in the main body data 301. As a result, an improvement in efficiency of processing related to the specification of a zone which the geofence definition data 30 is associated with can be expected.

### (Example of reference procedure during extraction)

Each field of the geofence definition data 30 (main body data 301, action data 303, and geometry data 305) may be referenced as appropriate when extracting the geofence definition data 31 associated with at least one of the first zone P1 and the second zone P2.

As one example, in a first step, the server apparatus 1 may specify the first zone P1 and the second zone P2 from the current position information 45 received from the client apparatus 2. As described earlier, the processing of specifying each zone (P1 or P2) from the current position 40 may be executed by at least one of the server apparatus 1 and the client apparatus 2. When the client apparatus 2 executes the processing of specifying each zone (P1 or P2) from the current position 40, the server apparatus 1 may specify each zone (P1 or P2) by referencing the current position information 45 received from the client apparatus 2.

In a second step, the server apparatus 1 may search for the geometry data 305 in the database 3 by using the zone ID of each specified zone (P1 or P2) as a query. According to the search, the geometry data 305 of a geometry belonging to at least one of the first zone P1 and the second zone P2 is extracted.

In a third step, the server apparatus 1 may search for the main body data 301 linked with the extracted geometry data 305 in the database 3 by using the geometry ID (identification information) of the extracted geometry data 305 as a query. According to the search, the main body data 301 indicating a geofence belonging to at least one of the first zone P1 and the second zone P2 is extracted. Note that the main body data 301 linked with a plurality of pieces of geometry data 305 (in other words, the main body data 301 indicating a geofence of an area demarcated by a plurality of geometries) may exist in the extracted main body data 301. In this case, the server apparatus 1 may verify whether or not the area demarcated after integration of the plurality of geometries belongs to at least one of the first zone P1 and the second zone P2. This verification may be executed as processing on the database 3. When it is determined that the area demarcated after integration of the plurality of geometries does not belong to both the first zone P1 and the second zone P2 as a result of the verification, the corresponding main body data 301 may be excluded from the extraction result.

In a fourth step, the server apparatus 1 may search for the action data 303 linked with the extracted main body data 301 in the database 3 by using the action ID (identification information) included in the extracted main body data 301 as a query. As a result of the search, the geofence definition data 31 constituted of the main body data 301, the action data 303, and the geometry data 305 is obtained. In one example of the present embodiment, when the geometry is common between a first geofence and a second geofence, first geofence definition data and second geofence definition data are constituted of the same geometry data 305. In other words, the geometry data 305 is shared between the first geofence definition data and the second geofence definition data. In a similar manner, when the action is common between the first geofence and the second geofence, the action data 303 is shared between the first geofence definition data and the second geofence definition data. Accordingly, a reduction in data volume of the geofence definition data 31 can be achieved.

In a fifth step, the server apparatus 1 may return the obtained geofence definition data 31 (main body data 301, action data 303, and geometry data 305) to the client apparatus 2. Accordingly, the geofence definition data 31 can be provided to the client apparatus 2.

### (Example of reference procedure during inside/outside determination)

In addition, each field of the geofence definition data 32 (main body data 301, action data 303, and geometry data 305) may be referenced as appropriate when executing an inside/outside determination of a geofence in the client apparatus 2.

As one example, in a first step, the client apparatus 2 may determine whether or not the determination execution condition of the main body data 301 is satisfied. In a second step, with respect to a geofence determined to satisfy the determination execution condition, the client apparatus 2 may reference the geometry ID (identification information) of the main body data 301 and access the geometry data 305 linked with the main body data 301. The client apparatus 2 may reference the geometry of the geometry data 305 and determine whether the current position 265 is inside or outside an area demarcated by the geometry. In one example of the present embodiment, this determination processing corresponds to an inside/outside determination of a geofence.

In one example, when a plurality of pieces of geometry data 305 are linked with the main body data 301, the client apparatus 2 may specify an area of a geofence by integrating the respective geometries of the plurality of pieces of geometry data 305 with a logical operator of the main body data 301. The client apparatus 2 may determine whether the current position 265 is inside or outside the specified area. **In** addition, in one example, when information on the area demarcated after the integration of the plurality of geometries is stored in the main body data 301 as an integrated figure, the client apparatus 2 may omit accessing the geometry data 305 and the like. In this case, the client apparatus 2 may reference the integrated figure of the main body data 301 and determine whether the current position 265 is inside or outside an area demarcated after the integration.

In one example of the present embodiment, with respect to a geofence not belonging to the zone to which the current position 265 belongs, the client apparatus 2 can determine that the current position 265 is outside the geofence (area demarcated by the geometry) without referencing the geometry. Therefore, as one example, in the second step, the client apparatus 2 may reference information on each zone and specify the zone to which the current position 265 belongs. The client apparatus 2 may determine whether or not an object geofence is associated with the zone to which the current position 265 belongs according to the zone ID in the geometry data 305. When a plurality of pieces of geometry data 305 are linked with the main body data 301, the client apparatus 2 may determine whether or not an object geofence is associated with the zone to which the current position 265 belongs according to the zone to which an area demarcated by integrating the respective geometries belongs. When the object geofence is not associated with the zone to which the current position 265 belongs, the client apparatus 2 may omit the reference of the geometry described above and determine that the current position 265 is outside the geofence. On the other hand, when the object geofence is associated with the zone to which the current position 265 belongs, the client apparatus 2 may determine whether the current position 265 is inside or outside the geofence by referencing the geometry as described above. Accordingly, the client apparatus 2 can narrow down objects for executing the inside/outside determination according to a comparison with the area demarcated by the geometry to the geofence associated with the zone to which the current position 265 belongs. As a result, an improvement in efficiency of processing of the inside/outside determination can be expected.

In a third step, the client apparatus 2 may reference the action ID (identification information) of the main body data 301 and access the action data 303 linked with the main body data 301. In addition, the client apparatus 2 may determine whether or not the action execution condition of the action data 303 is satisfied. In a fourth step, with respect to a geofence determined to satisfy the action execution condition, the client apparatus 2 may execute the action specified by the action content of the action data 303.

### (Other)

Note that a data format of the geofence definition data 30 (31 and 32) need not be particularly limited and may be selected as appropriate in accordance with the embodiment. In addition, a data structure of the geofence definition data 30 (31 and 32) (main body data 301, action data 303, and geometry data 305) may be modified as appropriate in accordance with the embodiment.

For example, in one example in Fig. 8, the action data 303 and the geometry data 305 are separated from the main body data 301. However, the configuration of the geofence definition data 30 (31 and 32) need not be limited to such an example. In another example, only one of the action data 303 and the geometry data 305 may be separated from the main body data 301 and the other may be included (incorporated) in the main body data 301. For example, only the action data 303 may be separated from the main body data 301 and the geometry data 305 may be included in the main body data 301. Only the geometry data 305 may be separated from the main body data 301 and the action data 303 may be included in the main body data 301. In yet another example, when reusability of actions and geometries is not ensured, both the action data 303 and the geometry data 305 may be included in the main body data 301.

In addition, for example, in one example in Fig. 8, with the geometry data 305 including a zone ID, the association of a geofence with respect to each zone is managed. However, the association management method need not be limited to such an example and may be modified as appropriate in accordance with the embodiment. In another example, list data configured to show, for each zone, a list of geofence definition data 30 belonging to each zone may be generated. The list data may be held in any storage area. The list data may be updated when the geofence definition data 30 is generated by registering identification information (main body ID or the like) of the generated geofence definition data 30 to the list of the zone to which a corresponding geofence belongs. In this case, the server apparatus 1 may acquire identification information of the geofence definition data 31 associated with at least one of the first zone P1 and the second zone P2 by referencing the list data as appropriate. In addition, the server apparatus 1 may extract the geofence definition data 31 by searching the database 3 using the acquired identification information.

### [Update of held data]

The client apparatus 2 may update the geofence definition data 32 held therein as the provision of the geofence definition data 31 in accordance with the current position 40 from the server apparatus 1 to the client apparatus 2 is repeatedly executed. When the provision of the geofence definition data 31 is repeated, at least a part of the geofence definition data 32 already held in the client apparatus 2 from previous provisions may possibly be extracted from the database 3 as at least a part of candidates for the geofence definition data 31 in the current provision.

In one example, provision of the geofence definition data 31 may be executed while allowing an overlap with the already-held geofence definition data 32. In other words, the server apparatus 1 may provide the client apparatus 2 with geofence definition data extracted from the database 3 as the geofence definition data 31 without excluding geofence definition data that overlaps with the geofence definition data 32 held by the client apparatus 2.

In another example, the server apparatus 1 may exclude geofence definition data that overlaps with the geofence definition data 32 held by the client apparatus 2 in the geofence definition data extracted from the database 3. In addition, the server apparatus 1 may provide the client apparatus 2 with geofence definition data that remains after excluding the overlapping geofence definition data as the geofence definition data 31. A method of excluding the overlapping geofence definition data may be determined as appropriate in accordance with the embodiment.

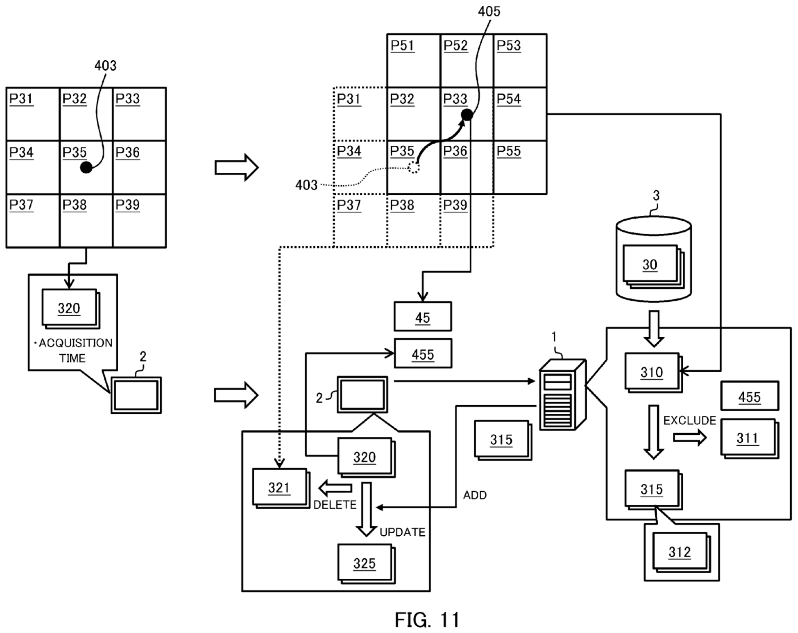

Fig. 11 schematically illustrates an example of a situation where the geofence definition data 32 held in the client apparatus 2 is updated according to the present disclosure. In the example in Fig. 11, a situation is envisioned where, at a time point t, a zone P35 to which the current position 403 belongs is the first zone P1, zones (P31 to P34 and P36 to P39) in a periphery of the zone P35 are the second zone P2, and due to the execution of provision of the geofence definition data 31 from the server apparatus 1 to the client apparatus 2, the client apparatus 2 holds the geofence definition data 320 associated with at least one of the respective zones P31 to P39. The geofence definition data 320 is an example of the geofence definition data 32 held by the client apparatus 2 at the time point t. In addition, a situation is envisioned where, at a time point t+1, due to the current position 405 moving inside the zone P33, the zone P33 becomes the first zone P1, the zone P35 becomes the second zone P2, the zone P32 and the zone P36 remain in the second zone P2, zones (P51 to P55) among the zones (P32, P35, P36, and P51 to P55) in a periphery of the zone P33 newly become the second zone P2, and the zones (P31, P34, P37, P38, and P39) go out of bounds from the second zone P2. The current position 403 is an example of the current position 40 at the time point t. The current position 405 is an example of the current position 40 at the time point t+1.

In one example, when transmitting the current position information 45 related to the current position 405 (40), the client apparatus 2 may further transmit a list 455 of the geofence definition data 320 (32) held in the client apparatus 2. In other words, the client apparatus 2 transmitting the current position information 45 may include transmitting the list 455 of held geofence definition data 320 (32). In the situation in Fig. 11, the list 455 can be constituted of a list of geofence definition data associated with at least one of the zones P31 to P39. The list 455 may be constituted of a list of geofence definition data associated with at least one of the zones (P32, P33, P35, and P36), excluding the zones (P31, P34, P37, P38, and P39) having gone out of bounds from the second zone P2. In other words, the list 455 may be constituted of a list of remaining geofence definition data after excluding geofence definition data that are not associated with at least one of the zones (P32, P33, P35, and P36) that remain as at least one of the first zone P1 and the second zone P2 and geofence definition data that are associated with at least one of the zones (P31, P34, P37, P38, and P39) having gone out of bounds from the first zone P1 and the second zone P2 among the held geofence definition data 320. In the list, the geofence definition data may be expressed as appropriate. For example, the list 455 may be constituted of a list of main body IDs of the geofence definition data.

Accordingly, the server apparatus 1 may receive the list 455. In accordance with the current position information 45, the server apparatus 1 may extract the geofence definition data 310 associated with at least one of the first zone P1 (zone P33) and the second zone P2 (P32, P35, P36, and P51 to P55) from the database 3. The server apparatus 1 may exclude geofence definition data 311 registered on the list 455 from the geofence definition data 310 extracted from the database 3. In addition, the server apparatus 1 may return geofence definition data 315 that remains after excluding the geofence definition data 311 registered on the list 455 to the client apparatus 2. The geofence definition data 315 to be returned is an example of the geofence definition data 31.

In other words, the server apparatus 1 receiving the current position information 45 may include receiving the list 455. The server apparatus 1 returning the extracted geofence definition data 31 may be constituted of excluding the geofence definition data 311 registered on the list 455 from the geofence definition data 310 extracted from the database 3 and returning the geofence definition data 315 (31) that remains after excluding the geofence definition data 311 registered on the list 455. In the example in Fig. 11, geofence definition data associated with at least one of the zones (P32, P33, P35, and P36) can be excluded as the geofence definition data 311. The geofence definition data associated with at least one of the zones P51 to P55 newly added as the second zone P2 at the time point t+1 and the new geofence definition data associated with at least one of the zones (P32, P33, P35, and P36) can be provided as the geofence definition data 315 to the client apparatus 2.

According to one example of the present embodiment, by omitting the transmission of the overlapping geofence definition data 311, an improvement in efficiently of communication processing can be expected. In addition, since the overlapping geofence definition data 311 is specified by the list 455 given by each client apparatus 2, the server apparatus 1 need not secure a storage area for continuously managing the geofence definition data 320 (32) held by each client apparatus 2. Accordingly, an improvement in efficiency of memory resources of the server apparatus 1 can be achieved. Note that a method of excluding the overlapping geofence definition data need not be limited to the example in Fig. 11 and may be modified as appropriate in accordance with the embodiment. In another example, when providing the geofence definition data 31 to the client apparatus 2, the server apparatus 1 may generate the list 455 by registering the geofence definition data 31 to be provided on the list 455. Accordingly, the server apparatus 1 may manage the list 455 of the geofence definition data 32 held in each client apparatus 2.

### (Provision of update data)

After being provided to the client apparatus 2, the geofence definition data may be updated (a change to an action, a correction of a geometry, or the like). Preferably, updated geofence definition data in the geofence definition data 32 held in the client apparatus 2 is not excluded from provision objects and is provided to the client apparatus 2. In consideration thereof, in one example of the present embodiment, the server apparatus 1 may execute the processing described above of providing the geofence definition data 315 (31) without excluding the updated geofence definition data in the geofence definition data registered on the list 455 from the extracted geofence definition data 310. A method of providing the updated geofence definition data may be determined as appropriate in accordance with the embodiment.

As one example, when the geofence definition data 320 (32) is provided from the server apparatus 1, the client apparatus 2 may record an acquisition time of the geofence definition data 320 (32) in a memory resource. The acquisition time may include a year, a month, and a day. A unit of the acquisition time may be selected arbitrarily. Accordingly, the list 455 may include the acquisition time of the geofence definition data 320 (32) by the client apparatus 2. The server apparatus 1 may use the acquisition time to determine whether or not overlapping geofence definition data between the geofence definition data 310 extracted from the database 3 and the geofence definition data registered on the list 455 has been updated. A method of determining the presence or absence of an update may be determined as appropriate in accordance with the embodiment. For example, when the main body data 301 includes an overall update time, the server apparatus 1 may determine whether or not geofence definition data has been updated by comparing the overall update time (value of update time field) of the main body data 301 with the acquisition time. A relationship between a comparison result and a determination result may be specified as appropriate in accordance with the embodiment. **In** one example, the server apparatus 1 may determine that the geofence definition data was not updated when the overall update time precedes the acquisition time and determine that the geofence definition data was updated when the overall update time is after the acquisition time. In addition, for example, when the main body data 301, the action data 303, and the geometry data 305 individually include update times, the server apparatus 1 may determine whether or not any of the three types of data (301, 303, and 305) has been updated by comparing the respective update times (values of update time field) of the three types of data (301, 303, and 305) with the acquisition time. The relationship between a comparison result and a determination result may be similar to that described above.

In other words, excluding the geofence definition data 311 registered on the list 455 from the extracted geofence definition data 310 may be constituted of determining whether or not the geofence definition data registered on the list 455 has been updated according to the acquisition time and excluding the geofence definition data 311 determined not to have been updated from the extracted geofence definition data 310 but not excluding the geofence definition data 312 determined to have been updated in the geofence definition data registered on the list 455.

The updated geofence definition data 312 is at least a part of the geofence definition data 30 associated with at least one of the zones (P32, P33, P35, and P36) that remain as at least one of the first zone P1 and the second zone P2. Accordingly, the geofence definition data 315 including the updated geofence definition data 312 is returned to the client apparatus 2 from the server apparatus 1. When only a part of the main body data 301, the action data 303, and the geometry data 305 is updated, the server apparatus 1 may return only the updated data among the three types of data as the geofence definition data 315. For example, when only the action data 303 is updated, the server apparatus 1 may return only the action data 303 as the geofence definition data 315. Alternatively, the server apparatus 1 may return the geofence definition data 315 including data that has not been updated.

According to one example of the present embodiment, updated geofence definition data 312 in the geofence definition data 320 (32) held in the client apparatus 2 can be provided to the client apparatus 2. Accordingly, the geofence definition data 32 (325) held in the client apparatus 2 can be brought up to date appropriately.

Note that a method of determining the presence or absence of an update need not be limited to a method based on an acquisition time and may be modified as appropriate in accordance with the embodiment. **In** another example, the geofence definition data 30 (31 and 32) may include version information. The version information may be held in at least one of the main body data 301, the action data 303, and the geometry data 305. The server apparatus 1 may determine whether or not geofence definition data has been updated by comparing the version information between the geofence definition data 310 extracted from the database 3 and the geofence definition data registered on the list 455. The server apparatus 1 may determine that the geofence definition data has been updated when the pieces of version information differ and determine that the geofence definition data has not been updated when the pieces of version information match each other. **In** addition, in another example, the server apparatus 1 may determine whether or not geofence definition data has been updated by comparing update times between the geofence definition data 310 extracted from the database 3 and the geofence definition data registered on the list 455. The server apparatus 1 may determine that the geofence definition data has been updated when the update times differ and determine that the geofence definition data has not been updated when the update times match each other.

### (Deletion of held data)

In addition, in one example, the client apparatus 2 may delete geofence definition data 321 that is not associated with the zones (P32, P33, P35, and P36) that remain in at least one of the first zone P1 and the second zone P2 but is associated with at least one of the zones (P31, P34, P37, P38, and P39) having gone out of bounds from the first zone P1 and the second zone P2. A form of deletion may be selected arbitrarily. Known forms may be adopted as the form of deletion. For example, deleting may be constituted of completely erasing, creating a state of being overwritable by other data, and the like.

In the example in Fig. 11, the client apparatus 2 may update held geofence definition data to the geofence definition data 325 at the time point t+1 by excluding the geofence definition data 321 from the geofence definition data 320 held at the time point t and adding the geofence definition data 315 provided from the server apparatus 1. The geofence definition data 325 is an example of the geofence definition data 32 held by the client apparatus 2 at the time point t+1. The client apparatus 2 need not delete and may continue to hold the action data 303 and the geometry data 305 that are shared with the geofence definition data associated with at least one of the zones (P32, P33, P35, and P36) that remain in at least one of the first zone P1 and second zone P2 in the geofence definition data 321 to be deleted.

Note that a timing at which deletion is executed may be determined as appropriate in accordance with the embodiment. In one example, the client apparatus 2 may delete the geofence definition data 321 in a zone having gone out of bounds from the first zone P1 and the second zone P2 at any timing before receiving new geofence definition data 31 (315) from the server apparatus 1. For example, the client apparatus 2 may delete the geofence definition data 321 in a zone having gone out of bounds from the first zone P1 and the second zone P2 before requesting new geofence definition data 31 (315) by transmitting the current position information 45 to the server apparatus 1. Accordingly, a storage area for accepting the new geofence definition data 31 (315) can be secured (free space can be expanded).

### [Priority]

In one example of the present embodiment, a priority may be specified for the geofence definition data 30 (31 and 32). Accordingly, the priority may be utilized in any situation such as a situation where geofence definition data is provided and a situation where an inside/outside determination is executed. For example, the server apparatus 1 may preferentially return geofence definition data with a high priority in the geofence definition data 31. In other words, the server apparatus 1 returning the extracted geofence definition data 31 to the client apparatus 2 may include preferentially returning geofence definition data with a high priority. A form of returning preferentially may be arbitrarily specified. In one example, returning preferentially may be constituted of at least one of sequentially transmitting the geofence definition data 31 in a descending order of priority and transmitting a predetermined number of pieces of geofence definition data 31 starting from the geofence definition data 31 with the highest priority. The predetermined number may be designated as appropriate. According to one example of the present embodiment, prioritizing the returning of geofence definition data with high priority ensures executability of a geofence with high priority.

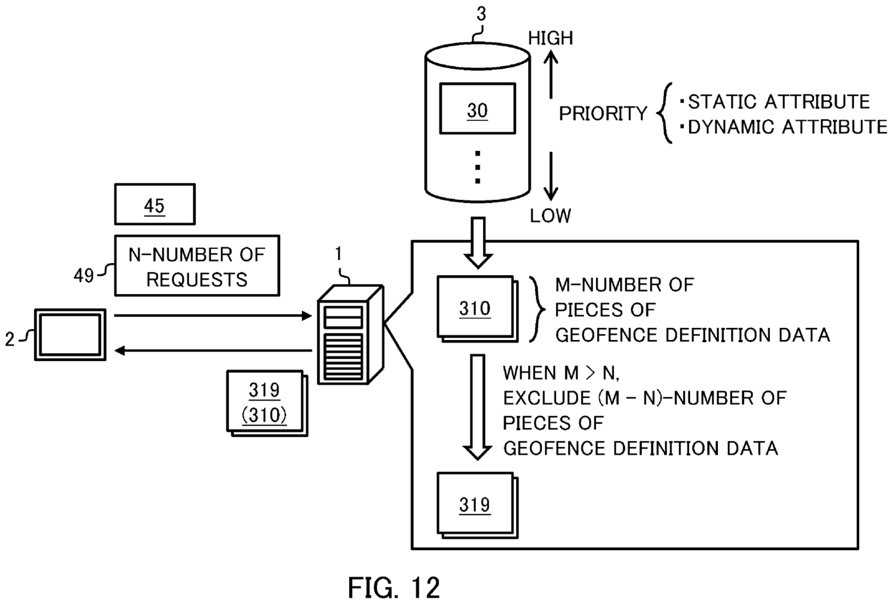

Fig. 12 schematically illustrates an example of a situation where a priority set to the geofence definition data 30 (31 and 32) is utilized according to the present embodiment. The priority may be set by any criteria. In one example, the priority may be specified according to at least one of a static attribute and a dynamic attribute of a geofence. The priority may be specified according to a combination of a plurality of attributes.

A static attribute in attributes of a geofence is an attribute of which a numerical value does not vary depending on dynamic factors such as the circumstances under which the geofence is used. For example, static attributes may include a degree of influence and an order of registration. The degree of influence may be calculated in advance according to criteria given by an administrator (operator, creator, provider, or the like) of the geofence. The criteria may be arbitrarily designated. Variations in the degree of influence to changes in the criteria may be allowed. In one example, the priority may be specified such that the higher the degree of influence, the higher the priority, and the lower the degree of influence, the lower the priority. In addition, the order of registration of a geofence (geofence definition data) may be specified as appropriate. For example, the order of registration may be specified according to the main body ID. **A** relationship between the order of registration and the priority may be arbitrarily set. In one example, the priority may be specified such that the newer the registration, the higher the priority, and the older the registration, the lower the priority. Conversely, the priority may be specified such that the older the registration, the higher the priority, and the newer the registration, the lower the priority. According to one example of the present embodiment, static attributes enable executability of a geofence with high priority to be ensured.

On the other hand, a dynamic attribute in attributes of a geofence is an attribute of which a numerical value can vary depending on dynamic factors. For example, dynamic attributes may include a distance from the current position to a boundary of a geofence, an update time, a selection by a user, and a designation by an administrator. In one example, the priority may be specified such that the shorter the distance from the current position to the boundary of the geofence (in other words, the closer the geofence), the higher the priority, and the longer the distance, the lower the priority. In addition, in one example, the priority may be specified such that the closer the update time is to the current time (the newer the update), the higher the priority, and the further the update time is to the current time, the lower the priority. The current time may be the time at which the priority is evaluated. In addition, in one example, a higher priority may be specified for a geofence that has been selected for acceptance by the user and a lower priority for a geofence that has not. The geofence definition data of a geofence that has not been selected for acceptance by the user need not be provided to the client apparatus 2 from the server apparatus 1 as the geofence definition data 31. Note that whether or not to accept an object geofence may be selected by any method. For example, the client apparatus 2 may accept the selection of geofence to be accepted on a group basis such as accepting a designation of a category of actions to be accepted. In addition, for example, the client apparatus 2 may accept a selection of whether to accept or not for each geofence. A selection result may be shared with the server apparatus 1 as appropriate. In addition, in one example, a higher priority may be specified for a geofence that has been designated for distribution by the administrator and a lower priority may be specified for a geofence that has not. The geofence definition data of a geofence that has not been designated for distribution by the administrator need not be provided to the client apparatus 2 from the server apparatus 1 as the geofence definition data 31. Note that whether or not to distribute an object geofence may be designated by any method. For example, in a similar manner to the selection by the user described above, the server apparatus 1 may accept a designation of geofences to be distributed on a group basis via a terminal of the administrator. In addition, for example, the server apparatus 1 may accept a designation of whether to distribute or not for each geofence. According to one example of the present embodiment, dynamic attributes enable executability of a geofence with high priority to be ensured.

In addition, in one example, when transmitting the current position information 45, the client apparatus 2 may transmit the number of requests 49 for the geofence definition data 31. In other words, the client apparatus 2 transmitting the current position information 45 may include transmitting the number of requests 49 for the geofence definition data 31. Accordingly, the server apparatus 1 may receive the number of requests 49. The server apparatus 1 may return, to the client apparatus 2, pieces of geofence definition data 319 corresponding to the number of requests 49 starting from the geofence definition data with the highest priority in the geofence definition data 310 extracted from the database 3. In other words, the server apparatus 1 receiving the current position information 45 may include receiving the number of requests 49. The server apparatus 1 returning the extracted geofence definition data 31 to the client apparatus 2 may be constituted of returning, to the client apparatus 2, pieces of geofence definition data 319 corresponding to the number of requests 49 starting from the geofence definition data with the highest priority in the extracted geofence definition data 310. The geofence definition data 319 is an example of the geofence definition data 31 to be provided.

In the example in Fig. 12, a situation is envisioned where the number of pieces of geofence definition data extracted from the database 3 as the geofence definition data 310 associated with at least one of the first zone P1 and the second zone P2 is M. In one example, M may be the number of pieces of geofence definition data 310 after excluding the geofence definition data 311 registered on the list 455. In addition, a situation is envisioned where the number of requests 49 by the client apparatus 2 is N. In this situation, when M is equal to or smaller than N, the server apparatus 1 may return the extracted geofence definition data 310 as the geofence definition data 319 corresponding to the number of requests 49 to the client apparatus 2. The number of pieces of geofence definition data 319 returned from the server apparatus 1 may be less than the number of requests 49. On the other hand, when M exceeds N, after excluding (M - N)-number of pieces of geofence definition data starting from the geofence definition data with the lowest priority, the server apparatus 1 may return the remaining N-number of pieces of geofence definition data 319 to the client apparatus 2.

Here, the updated geofence definition data 312 in the example in Fig. 11 described above may be overwritten by the same data after being provided to the client apparatus 2. Accordingly, the server apparatus 1 need not appropriate the updated geofence definition data 312 into the number of requests 49 (N). The server apparatus 1 may constitute the N-number of pieces of geofence definition data with geofence definition data other than the updated geofence definition data 312. In other words, the server apparatus 1 may appropriate the N-number of geofences with geofences not associated with the existing zones (P32, P33, P35, and P36) but associated with any of the new zones (P51 to P55) and with new geofences associated with any of the existing zones (P32, P33, P35, and P36). In addition, the server apparatus 1 may provide the client apparatus 2 with the updated geofence definition data 312 and the N-number of pieces of geofence definition data as the geofence definition data 319.

According to one example of the present embodiment, executability of a geofence with high priority can be ensured. In addition, by returning the geofence definition data 31 (319) having been narrowed down to the number of pieces of data designated by the client apparatus 2, an improvement in efficiency of communication processing can be expected.

Note that the number of requests 49 may be designated by any method. In one example, the number of requests 49 may be determined according to a free space of the memory resource of the client apparatus 2. Accordingly, the number of requests 49 may be determined as appropriate so as not to exceed the free space of the memory resource. For example, the client apparatus 2 may determine any number equal to or smaller than "(maximum number of geofences that can be held by memory resource) - (number of maintained geofences)" as the number of requests 49. An example of maintained geofences is a geofence associated with at least one of the zones (P32, P33, P35, and P36) that remain as at least one of the first zone P1 and the second zone P2 in the example in Fig. 11 described above. "(Maximum number of geofences that can be held by memory resource) - (number of maintained geofences)" is an example of a free space. The client apparatus 2 may expand the free space of the memory resource by deleting the geofence definition data 321 in a zone having gone out of bounds from the first zone P1 and the second zone P2 before requesting new geofence definition data 31. Accordingly, a maximum value of the number of requests 49 can be increased. The free space of the memory resource may be a free space when determining the number of requests 49 or a free space predicted when receiving the new geofence definition data 31. The prediction of a free space may be performed by any method. According to one example of the present embodiment, the provision of geofence definition data that cannot be held due to exceeding the memory resource can be suppressed. As a result, an improvement in efficiency of communication processing can be expected. However, a method of designating the number of requests 49 need not be limited to such an example and may be modified as appropriate in accordance with the embodiment. In another example, the number of requests 49 may be designated by the user.

In addition, in one example, the number of requests 49 may be configured to directly indicate the number of pieces of geofence definition data to be requested. However, in one example of the present embodiment, the sharing of at least one of an action and a geometry between different geofences may result in the sharing of at least one of the action data 303 and the geometry data 305 between corresponding pieces of geofence definition data. The sharing of at least one of the action data 303 and the geometry data 305 enables a reduction in data volume between corresponding pieces of geofence definition data to be achieved. In addition, a plurality of pieces of geometry data 305 may be associated with a single piece of main body data 301. Therefore, each piece of geofence definition data does not necessarily have the same data volume. Therefore, in another example, the number of requests 49 may be configured to indirectly indicate the number of requests using a total data volume of geofence definition data to be requested or the like.

### [Server apparatus/client apparatus]

The server apparatus 1 may be constituted of one or more servers (computers). When the server apparatus 1 is constituted of a plurality of servers, the plurality of servers may execute information processing of the server apparatus 1 according to the present disclosure by cooperating with each other. In this case, the plurality of servers may be counted as one server apparatus 1. In addition, the client apparatus 2 may be one or more computers configured to monitor a position of a movable object. The numbers of the server apparatus 1 and the client apparatus 2 may each be arbitrarily determined. Any number of client apparatuses 2 may request a single server apparatus 1 to provide the geofence definition data 31.

### [2 Configuration example]

### [Hardware configuration example]

### (Server apparatus)

Fig. 13 schematically illustrates an example of a hardware configuration of the server apparatus 1 according to the present embodiment. In one example, the server apparatus 1 according to the present embodiment may be configured as a computer to which a controller 11, a storage 12, and the communication module 13 are electrically connected.

The controller 11 may include a CPU that is a hardware processor, a random access memory (RAM), and a read only memory (ROM) and is configured to execute information processing based on a program and various kinds of data. The controller 11 (CPU) is an example of a processor resource.

For example, the storage 12 may include a hard disk drive, a solid state drive, a semiconductor memory, and the like and is configured to hold any data. The storage 12, the RAM, and the ROM are examples of a memory resource of the server apparatus 1. In one example of the present embodiment, the storage 12 may store various kinds of information such as a program 81.

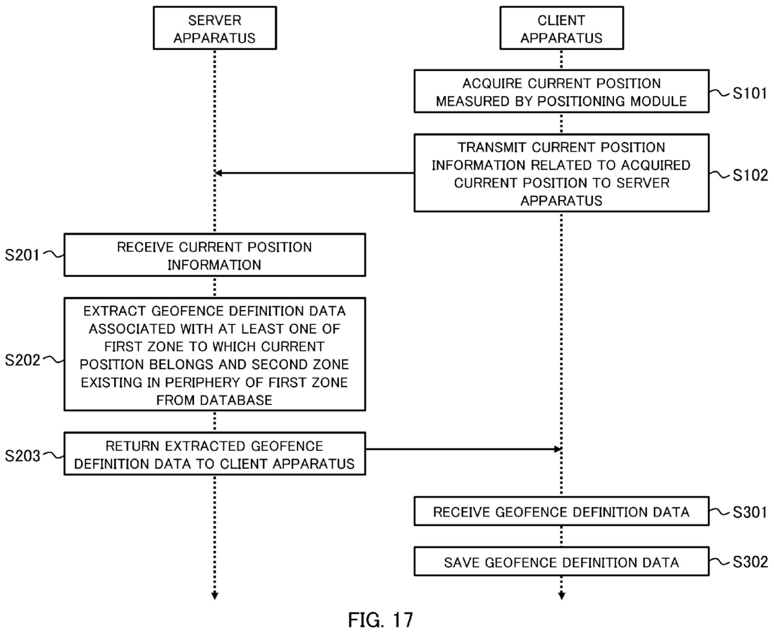

The program 81 is a program for causing the server apparatus 1 to execute information processing (Fig. 17 to be described later) related to the provision of geofence definition data with respect to the client apparatus 2. The program 81 includes a series of instructions of the information processing.

In one example, the program 81 may be stored in a storage medium 91 instead of the storage 12 or together with the storage 12. The storage medium 91 is configured to accumulate various kinds of information (stored programs and the like) by an electrical action, a magnetic action, an optical action, a mechanical action, or a chemical action so that the information is readable by a machine such as a computer. The storage 12 and the storage medium 91 are examples of a non-transitory storage medium. The server apparatus 1 can acquire the program 81 from the storage medium 91. The storage medium 91 may be a disk-type storage medium (CD, DVD, or the like) or a non-disk type storage medium that is a semiconductor memory (flash memory or the like). Any drive apparatus may be used to read information stored in the storage medium 91. A type of the drive apparatus may be selected according to the storage medium 91. The drive apparatus may be connected to the server apparatus 1 by any method. The storage medium 91 may include an external main memory. When the server apparatus 1 holds the database 3, the database 3 may be stored in at least one of the storage 12 and the storage medium 91.

The communication module 13 is configured to perform wired or wireless communication via a network. For example, the communication module 13 may be constituted of a wired local area network (LAN) module or a wireless LAN module. A standard of the network need not be particularly limited and may be selected as appropriate in accordance with the embodiment. For example, a type of the network may be selected as appropriate from the Internet, a wireless communication network, a mobile communication network, a telephone network, and a dedicated network. The server apparatus 1 may execute data communication with another computer (for example, the client apparatus 2 or an external computer other than the client apparatus 2) via the communication module 13.

With respect to a specific hardware configuration of the server apparatus 1, components can be omitted, replaced, or added as appropriate in accordance with the embodiment. For example, the controller 11 may include a plurality of hardware processors. The hardware processors may be constituted of a microprocessor, a field-programmable gate array (FPGA), a digital signal processor (DSP), an electronic control unit (ECU), a graphics processing unit (GPU), an application specific integrated circuit (ASIC), and the like. The server apparatus 1 may further include an input device and an output device. The input device is configured to accept input of information. The input device may be constituted of, for example, a mouse, a keyboard, or an operator. The output device is configured to output information. The output device may be constituted of, for example, a display or a speaker. The input device and the output device may be integrally configured at least in part by a touch panel display or the like. The input device and the output device may be connected to the server apparatus 1 as appropriate. The program 81 may be saved in an external main memory such as a NAS. The external main memory is also an example of a non-transitory storage medium. The server apparatus 1 may be constituted of a plurality of computers. In this case, hardware configurations of the respective computers may or may not match each other. The server apparatus 1 may be a computer designed specifically for a service to be provided, as well as a general-purpose server apparatus, a general-purpose personal computer (PC), or the like.

### (Client apparatus)

Fig. 14 schematically illustrates an example of a hardware configuration of the client apparatus 2 according to the present embodiment. In one example, the client apparatus 2 according to the present embodiment may be configured as a computer to which a controller 21, a storage 22, a communication module 23, an input device 24, an output device 25, and the positioning module 26 are electrically connected.

The controller 21 to the communication module 23 of the client apparatus 2 and a storage medium 92 may each be configured in a similar manner to each of the controller 11 to the communication module 13 of the server apparatus 1 and the storage medium 91 described above. The controller 21 (CPU) is an example of a processor resource of the client apparatus 2. The storage 22, a RAM, and a ROM are examples of a memory resource of the client apparatus 2. In one example of the present embodiment, the storage 22 may store various kinds of information such as the program 82 and the geofence definition data 32.

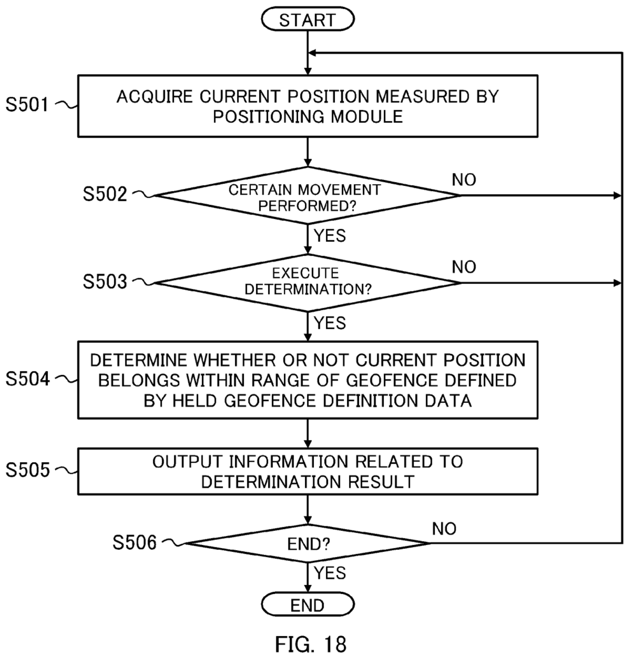

The program 82 is a program for causing the client apparatus 2 to execute information processing (Fig. 17 to be described later) related to a request for geofence definition data with respect to the server apparatus 1 and information processing (Fig. 18 to be described later) related to an inside/outside determination of a geofence. The program 82 includes series of instructions of the information processing. A series of instructions of the information processing related to a request for geofence definition data and a series of instructions of the information processing related to an inside/outside determination of a geofence may be held as separate programs.

In one example, at least one of the program 81 and the geofence definition data 32 may be stored in the storage medium 92 instead of the storage 22 or together with the storage 22. The client apparatus 2 may acquire at least one of the program 81 and the geofence definition data 32 from the storage medium 92. The storage 22 and the storage medium 92 are examples of a non-transitory storage medium.

The client apparatus 2 may execute data communication with another computer (for example, the server apparatus 1 or the like) via the communication module 23.

The input device 24 is configured to accept input of information. The input device 24 may be constituted of, for example, a mouse, a keyboard, or an operator. The output device 25 is configured to output information. The output device 25 may be constituted of, for example, a display or a speaker. The user can operate the client apparatus 2 by using the input device 24 and the output device 25. The input device 24 and the output device 25 need not be directly connected to the client apparatus 2 and may be indirectly connected via at least one of the communication module 23 and an external interface. For example, the external interface may be configured as appropriate to connect to an external apparatus in a wired or wireless manner by a universal serial bus (USB) port, a dedicated port, or the like. The input device 24 and the output device 25 may be integrally configured at least in part by a touch panel display or the like.

The positioning module 26 is configured to measure a position. A type of the positioning module 26 need not be particularly limited as long as the positioning module 26 is capable of measuring positions and may be selected as appropriate in accordance with the embodiment. For example, the positioning module 26 may be constituted of a global positioning system (GPS) sensor, a global navigation satellite system (GNSS) sensor, or the like. In addition, for example, the positioning module 26 may be configured to estimate a distance to each base station (wireless access point) according to an intensity of a signal received from each base station. The positioning module 26 may be configured to measure a position by any method (such as trilateration) based on an estimated distance to each base station. In this case, the positioning module 26 may be at least partially common with the communication module 23. In one example, the positioning module 26 may be constituted of the controller 21 (CPU) and the communication module 23. A type of the base stations may be selected as appropriate in accordance with the embodiment. In addition, the positioning module 26 need not be built into the client apparatus 2 and may be connected to the client apparatus 2 via at least one of the communication module 23 and an external interface.

With respect to a specific hardware configuration of the client apparatus 2, components can be omitted, replaced, or added as appropriate in accordance with the embodiment. For example, the controller 21 may include a plurality of hardware processors. The hardware processors may be constituted of a microprocessor, an FPGA, a DSP, an ECU, a GPU, an ASIC, or the like. At least one of the input device 24 and the output device 25 may be omitted. The client apparatus 2 may be connected to another apparatus (the mobile object MB, various sensors, or the like) via at least one of the communication module 23 and an external interface. The client apparatus 2 may be constituted of a plurality of computers. In this case, hardware configurations of the respective computers may or may not match each other. The client apparatus 2 may be a computer designed specifically for a service to be provided, as well as a general-purpose PC, a notebook PC, a terminal apparatus, or the like. The terminal apparatus may include a user terminal such as a smartphone or a tablet terminal. In addition, in one example, when deployed in a vehicle, the client apparatus 2 may be an in-vehicle apparatus (in-vehicle device, terminal apparatus, or the like).

### [Software configuration]

### (Server apparatus)

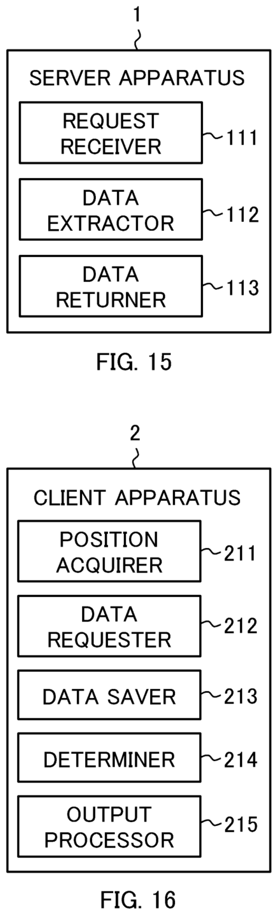

Fig. 15 schematically illustrates an example of a software configuration of the server apparatus 1 according to the present embodiment. The controller 11 of the server apparatus 1 executes instructions included in the program 81 stored in the storage 12 with the CPU. Accordingly, the server apparatus 1 operates as a computer including a request receiver 111, a data extractor 112, and a data returner 113 as software modules. In other words, in the present embodiment, each software module of the server apparatus 1 is realized by the controller 11 (CPU).

The request receiver 111 is configured to receive the current position information 45 from the client apparatus 2. In accordance with the current position information 45, the data extractor 112 is configured to extract the geofence definition data 31 associated with at least one of the first zone P1 to which the current position 40 belongs and the second zone P2 that exists in a periphery of the first zone P1 from the database 3 (geofence definition data 30). The data returner 113 is configured to return the extracted geofence definition data 31 to the client apparatus 2.

### (Client apparatus)

Fig. 16 schematically illustrates an example of a software configuration of the client apparatus 2 according to the present embodiment. The controller 21 of the client apparatus 2 executes instructions included in the program 82 stored in the storage 22 with the CPU. Accordingly, the client apparatus 2 operates as a computer including a position acquirer 211, a data requester 212, a data saver 213, a determiner 214, and an output processor 215 as software modules. In other words, in the present embodiment, each software module of the client apparatus 2 is also realized by the controller 21 (CPU) in a similar manner to the server apparatus 1.

The position acquirer 211 is configured to acquire the current position (40 or 265) as measured by the positioning module 26. The data requester 212 is configured to transmit the current position information 45 related to the acquired current position 40 to the server apparatus 1. The data saver 213 is configured to receive the geofence definition data 31 from the server apparatus 1 and save the received geofence definition data 31 (update the held geofence definition data 32). The determiner 214 is configured to determine whether the acquired current position 265 is inside or outside a corresponding geofence according to the held geofence definition data 32. In other words, the determiner 214 is configured to determine whether or not the current position 265 is within a range of a geofence defined by the held geofence definition data 32. The output processor 215 is configured to output information related to a determination result of the geofence.

### (Other)

Note that in the present embodiment, an example where each software module of the server apparatus 1 and the client apparatus 2 is realized by a general-purpose CPU is described. However, a part of or all of the software modules described above may be realized by one or a plurality of dedicated processors or chip sets. Each of the modules described above may be realized as a hardware module. With respect to software configurations of the server apparatus 1 and the client apparatus 2, modules may be omitted, replaced, or added as appropriate in accordance with the embodiment.

### [3 Operation example]

### [Provision of geofence definition data]

Fig. 17 is a sequence diagram illustrating an example of a processing procedure related to a request and provision of geofence definition data according to the present embodiment. The processing procedure of the server apparatus 1 described below is an example of an information processing method to be executed by a server apparatus. The processing procedure of the client apparatus 2 described below is an example of an information processing method to be executed by a client apparatus. The overall processing procedure described below is an example of an information processing method to be executed by a system. However, the processing procedure described below are merely examples and each step may be modified as much as possible. In addition, with respect to the processing procedure described below, steps can be omitted, replaced, or added as appropriate in accordance with the embodiment.

### (Step S101 and step S102)

In step S101, the controller 21 of the client apparatus 2 operates as the position acquirer 211 and acquires the current position 40 as measured by the positioning module 26. In step S102, the controller 21 operates as the data requester 212 and transmits the current position information 45 related to the acquired current position 40 to the server apparatus 1. Accordingly, the client apparatus 2 requests the server apparatus 1 to provide geofence definition data in accordance with the current position 40.

The current position information 45 may be configured as appropriate so as to include information that enables the first zone (first zone P1) to which the current position 40 belongs and the second zone (second zone P2) in a periphery of the first zone (first zone P1) to be specified. In one example, the current position information 45 may be configured to indicate the current position 40. In another example, the current position information 45 may be configured to indicate the first zone P1. In yet another example, the current position information 45 may be configured to indicate at least a part of the second zone P2 and the first zone P1. Each of the zones (P1 and P2) may be indicated by, for example, information such as a zone ID or a coordinate range.

In one example, before executing the processing of step S102, the controller 21 of the client apparatus 2 may delete the geofence definition data 321 that is not associated with the zones (P32, P33, P35, and P36) that remain in at least one of the first zone P1 and the second zone P2 but is associated with at least one of the zones (P31, P34, P37, P38, and P39) having gone out of bounds from the first zone P1 and the second zone P2. Accordingly, the controller 21 of the client apparatus 2 may expand free space of a memory resource for accepting new geofence definition data.

In addition, in one example, in step S102, the controller 21 of the client apparatus 2 may further transmit the list 455 of held geofence definition data 320 (32). The list 455 may be configured to indicate a list of geofence definition data that is maintained by excluding geofence definition data of the zones (P31, P34, P37, P38, and P39) having gone out of bounds from the first zone P1 and the second zone P2 and being associated with at least one of the zones (P32, P33, P35, and P36) that remain in at least one of the first zone P1 and the second zone P2. In the list 455, the geofence definition data may be indicated by identification information such as a main body **ID.** In addition, in one example, the list 455 may include the acquisition time of the geofence definition data 320 (32) by the client apparatus 2. An order of transmitting the current position information 45 and the list 455 need not be particularly limited and may be determined as appropriate in accordance with the embodiment.

In addition, in one example, in step S102, the controller 21 of the client apparatus 2 may further transmit the number of requests 49 for the geofence definition data 31. In one example, the number of requests 49 may be determined according to the free space of the memory resource of the client apparatus 2. Executing the processing described above of deleting the geofence definition data of the zones (P31, P34, P37, P38, and P39) having gone out of bounds from the first zone P1 and the second zone P2 before the processing of step S102 enables an upper limit value of the number of requests 49 to be increased. An order of transmitting the current position information 45 and the number of requests 49 need not be particularly limited and may be determined as appropriate in accordance with the embodiment.

In addition, timings of executing the processing of step S101 and step S102 need not be particularly limited and may be determined as appropriate in accordance with the embodiment. For example, the controller 21 of the client apparatus 2 may execute the processing of step S101 and step S102 during startup of the apparatus (client apparatus 2, mobile object MB, or the like). In addition, for example, the controller 21 may periodically execute the processing of step S101 and step S102. In addition, for example, the controller 21 may determine whether or not a movement satisfying a predetermined condition has been performed such as a movement exceeding a predetermined distance or a movement to an adjacent zone. Whether or not a movement satisfying the predetermined condition has been performed may be determined by any method. In one example, the controller 21 may monitor a movement of an object (trajectory of position) by repetitively executing the processing of step S101. In another example, an object (client apparatus 2, mobile object MB, or the like) may include a sensor capable of observing movement such as a velocity sensor or an acceleration sensor. The controller 21 may monitor a movement of an object according to an observation result of the sensor. The controller 21 may determine whether or not a movement satisfying the predetermined condition has been performed according to a result of monitoring of movement. For example, the controller 21 may determine that a movement satisfying the predetermined condition (movement exceeding the predetermined distance) has been performed in response to an amount of movement (amount of change in position or the like) exceeding a threshold. On the other hand, when the amount of movement is less than the threshold, the controller 21 may determine that a movement satisfying the predetermined condition has not been performed. When the amount of movement is equal to the threshold, the controller 21 may determine that a movement satisfying the predetermined condition has been performed or determine that a movement satisfying the predetermined condition has not been performed. The threshold may be arbitrarily specified. In addition, for example, the controller 21 may determine a zone to which a current position obtained at each timing belongs by referring to information on each zone. As a result of the determination, the controller 21 may determine that a movement to an adjacent zone (movement satisfying the predetermined condition) has been performed in response to a change in the zone to which the current position belongs. On the other hand, when the zone to which the current position belongs has not changed (a state of belonging to a same zone continues), the controller 21 may determine that a movement satisfying the predetermined condition has not been performed. In addition, the controller 21 may execute the processing of step S102 in response to determining that a movement satisfying the predetermined condition has been performed.

### (Step S201 to step S203)

In step S201, the controller 11 of the server apparatus 1 operates as the request receiver 111 and receives the current position information 45 from the client apparatus 2. In step S202, the controller 11 operates as the data extractor 112. In other words, in accordance with the current position information 45, the controller 11 extracts the geofence definition data 31 associated with at least one of the first zone P1 to which the current position 40 belongs and the second zone P2 that exists in a periphery of the first zone P1 from the database 3. In step S203, the controller 11 operates as the data returner 113 and returns the extracted geofence definition data 31 to the client apparatus 2.

In one example, in step S201, the controller 11 may receive the list 455 from the client apparatus 2. In this case, in step S203, the controller 11 may exclude the geofence definition data 311 registered on the list 455 from the geofence definition data 310 extracted from the database 3. In addition, the controller 11 may return the geofence definition data 315 (31) that remains after excluding the geofence definition data 311 registered on the list 455 to the client apparatus 2.

In addition, in one example, the list 455 received in step S201 may include the acquisition time of the geofence definition data 320 (32) by the client apparatus 2. Accordingly, in step S203, the controller 11 may determine whether or not the geofence definition data registered on the list 455 has been updated according to the acquisition time. The controller 11 need not exclude the geofence definition data 312 determined to be updated in the geofence definition data registered on the list 455 and may exclude the geofence definition data 311 determined not to be updated from the extracted geofence definition data 310. In addition, the controller 11 may return the geofence definition data 315 (31) that remains after excluding the geofence definition data 311 determined not to be updated to the client apparatus 2.

In addition, in one example, a priority may be specified for the geofence definition data 30 (31 and 32). The priority may be set by any criteria. In one example, the priority may be specified according to at least one of a static attribute and a dynamic attribute of a geofence. When the priority is specified according to a dynamic attribute, the controller 11 may calculate a priority of each geofence (geofence definition data 31) at any timing before executing the processing of step S203. For example, when specifying the priority according to a distance to a boundary of a geofence, the controller 11 may reference an integrated figure in the main body data 301 or a geometry in the geometry data 305 in the geofence definition data 31 and calculate a distance from the current position 40 or the first zone P1 (current position information 45) to a boundary of the geofence. The controller 11 may specify the priority of each geofence (geofence definition data 31) according to the calculated distance. In one example, when priorities have been specified, in step S203, the controller 11 may preferentially return geofence definition data with a high priority in the geofence definition data 31.

In addition, in one example, in step S201, the controller 11 may receive the number of requests 49. In this case, in step S203, the controller 11 may return, to the client apparatus 2, pieces of geofence definition data 319 corresponding to the number of requests 49 starting from the geofence definition data with the highest priority in the geofence definition data 310 extracted from the database 3. In one example, after excluding the geofence definition data 311 determined not to be updated, the controller 11 may return pieces of geofence definition data 319 corresponding to the number of requests 49 starting from the geofence definition data with the highest priority to the client apparatus 2. At this point, the controller 11 need not appropriate the updated geofence definition data 312 into the number of requests 49 but may appropriate the number of requests 49 with geofences not associated with the existing zones (P32, P33, P35, and P36) but associated with any of the new zones (P51 to P55) and with new geofences associated with any of the existing zones (P32, P33, P35, and P36).

In addition, in one example, the geofence definition data 30 may be constituted of the main body data 301, the action data 303, and the geometry data 305. Accordingly, the processing of step S202 may be constituted of the processing of the first to fourth steps of the reference procedure during extraction described above. The processing of step S203 may be constituted of the processing of the fifth step.

### (Step S301 and step S302)

In step S301, the controller 21 of the client apparatus 2 operates as the data saver 213 and receives the geofence definition data 31 from the server apparatus 1. In step S302, the controller 21 operates as the data saver 213 and saves the received geofence definition data 31. In other words, the controller 21 updates the held geofence definition data 32 with the received geofence definition data 31.

In one example, when priorities have been set to the geofence definition data 31, the controller 11 may preferentially save geofence definition data with a high priority in the received geofence definition data 31. In one example, the controller 21 may select whether or not to save each piece of geofence definition data 31 according to the priority. For example, the controller 21 may select to save any number of pieces of geofence definition data 31 starting from the geofence definition data 31 with the highest priority and select not to save (in other words, exclude from objects to be saved) any number of pieces of geofence definition data 31 with lower priorities. The number of pieces of geofence definition data 31 to be saved may be determined arbitrarily. In one example, the number of pieces of geofence definition data 31 to be saved may be determined according to the free space of the memory resource of the client apparatus 2.

Once the received geofence definition data 31 is saved (held geofence definition data 32 is updated), the processing procedure related to a request and provision of geofence definition data according to the present operation example ends. In one example of the present embodiment, the series of processing from step S101 to step S302 may be executed in real-time. In addition, in one example, the series of processing from step S101 to step S302 may be repeatedly executed as appropriate. Accordingly, in the client apparatus 2, a state where the geofence definition data 32 of geofences defined by a current position and a predetermined range (first zone P1 and second zone P2) in the periphery of the current position is held can be maintained.

### [Inside/outside determination of geofence]

Fig. 18 is a flow chart illustrating an example of a processing procedure related to an inside/outside determination of a geofence according to the present embodiment. The processing procedure described below is an example of an information processing method to be executed by a computer (client apparatus 2). However, the processing procedure described below is merely an example and each step may be modified as much as possible. In addition, with respect to the processing procedure described below, steps can be omitted, replaced, or added as appropriate in accordance with the embodiment.

### (Step S501)

In step S501, the controller 21 of the client apparatus 2 operates as the position acquirer 211 and acquires the current position 265 as measured by the positioning module 26. The processing of step S501 may be similar to the processing of step S101 described above. Once the current position 265 is acquired, the controller 21 advances processing to a next step S502.

### (Step S502)

In step S502, the controller 21 determines whether or not a movement satisfying a predetermined condition (a certain movement) has been performed. A method of determining whether or not a movement satisfying the predetermined condition has been performed may be similar to the method described above. In one example, the controller 21 may monitor a movement of an object (trajectory of position) according to the current position 265 obtained by the processing of step S501. In another example, the controller 21 may monitor a movement of an object according to an observation result of a sensor such as a velocity sensor or an acceleration sensor. The controller 21 may determine whether or not a movement satisfying the predetermined condition has been performed according to a result of monitoring of movement. When it is determined that a movement satisfying the predetermined condition has been performed, the controller 21 advances processing to a next step S503. On the other hand, when it is determined that a movement satisfying the predetermined condition has not been performed, the controller 21 returns processing to step S501 and repeatedly executes processing of step S501 and step S502.

According to one example of the present embodiment, the processing of step S502 enables a timing where the inside/outside determination of a geofence is executed to be limited to when a certain movement has been performed. Accordingly, the execution of the inside/outside determination can be prevented from being repeated when stationary. As a result, an improvement in efficiency of processing of the inside/outside determination can be expected. Note that the timing of executing the processing of step S502 need not be limited to such an example and may be specified or modified as appropriate in accordance with the embodiment. When the current position is not used in the determination of step S502, the processing of step S502 may be executed before step S501. Alternatively, the processing of step S502 may be omitted.

### (Step S503)

In step S503, the controller 21 operates as the determiner 214 and determines whether or not a determination execution condition of a geofence indicated by the held geofence definition data 32 is satisfied. Whether or not the determination execution condition is satisfied may be determined as appropriate. The controller 21 advances processing to a next step S504 with respect to a geofence determined to satisfy the determination execution condition. On the other hand, with respect to a geofence determined not to satisfy the determination execution condition, the controller 21 omits processing of step S504 and subsequent steps, returns processing to step S501, and once again executes processing from step S501. In other words, when none of the geofences satisfy the determination execution condition, the controller 21 returns processing to step S501 and once again executes processing from step S501. When at least a part of the geofences satisfies the determination execution condition, the controller 21 advances processing to the next step S504 and executes processing of step S504 and subsequent steps with respect to the geofences that satisfy the determination execution condition.

In one example, when the geofence definition data 32 is constituted of the main body data 301, the action data 303, and the geometry data 305, the processing of step S503 may be constituted of the processing of the first step of the reference procedure during an inside/outside determination described above.

In one example, a priority may be specified for the geofence definition data 32. In one example, the priority may be specified according to at least one of a static attribute and a dynamic attribute of a geofence. When the priority is specified according to a dynamic attribute, the controller 21 may calculate a priority of each geofence (geofence definition data 32) at any timing before executing the processing of step S503. For example, when specifying the priority according to a distance to a boundary of a geofence, the controller 21 may reference an integrated figure in the main body data 301 or a geometry in the geometry data 305 in the geofence definition data 32 and calculate a distance from the current position 265 to the boundary of the geofence. The controller 21 may specify the priority of each geofence (geofence definition data 32) according to the calculated distance.

In one example, when a priority is specified for the geofence definition data 32, the controller 21 may execute processing from step S503 using the geofence definition data 32 in a descending order of priority. In addition, in one example, the controller 21 may execute processing from step S503 with respect to any number of pieces of geofence definition data 32 starting from the geofence definition data 32 with the highest priority. The controller 21 may omit the processing from step S503 with respect to any number of pieces of geofence definition data 32 with low priorities. In other words, the controller 21 may execute inside/outside determination with respect to geofences with high priorities and omit inside/outside determination of geofences with low priorities. The number of geofences to be an object of execution may be determined as appropriate in accordance with the embodiment. For example, the number of geofences to be an object of execution may be determined according to a processing load on the client apparatus 2 such as reducing the number in a state where the processing load on the client apparatus 2 is high and increasing the number in a state where the processing load is low. The processing load may be evaluated by any method such as utilization of the controller 21 (CPU).

Note that in one example, the determination execution condition need not be specified. In addition, in one example, the field for the determination execution condition may be omitted in the geofence definition data 30 (31 and 32). When the determination execution condition is not specified or the determination execution condition is to be omitted, the processing of step S503 may be omitted.

### (Step S504)

In step S504, the controller 21 operates as the determiner 214 and determines whether or not the current position 265 belongs within a range of a geofence defined by the held geofence definition data 32. In other words, the controller 21 determines whether the acquired current position 265 is inside or outside a geofence defined by the held geofence definition data 32.

In one example, in the determination processing, the controller 21 may generate a determination result configured to indicate being positioned inside or being positioned outside the defined geofence. In addition, in one example, a determination result of a previous inside/outside determination may exist with respect to at least a part of the geofences due to the continuous execution of inside/outside determinations. When there is a previous determination result, the controller 21 may generate a determination result configured to indicate staying outside the geofence, entering the geofence from outside, staying inside the geofence, or exiting the geofence to the outside according to the previous and current determination results.

**In** one example, when the geofence definition data 32 is constituted of the main body data 301, the action data 303, and the geometry data 305, the processing of step S504 may be constituted of the processing of the second step of the reference procedure during an inside/outside determination described above. **In** one example, with respect to a geofence not associated with the zone to which the current position 265 belongs, the controller 21 may omit an inside/outside determination according to a comparison with an area demarcated by the geometry and determine that the current position 265 is outside the geofence. Accordingly, the controller 21 may narrow down objects for executing the inside/outside determination according to a comparison with the area demarcated by the geometry to the geofence associated with the zone to which the current position 265 belongs. The controller 21 advances processing to a next step S505 with respect to a geofence on which the determination processing has been completed.

### (Step S505)

In step S505, the controller 21 operates as the output processor 215 and outputs information related to a determination result of the geofence.

An output destination and a content of information to be output may be respectively selected as appropriate in accordance with the embodiment. In one example, the controller 21 may output the determination result described above as it is. The output destination may be, for example, a RAM, the storage 22, the output device 25, or another computer (including an external main memory). For example, the controller 21 may save the current determination result in a memory resource for use in the next and subsequent inside/outside determinations. In addition, in one example, the controller 21 may determine whether or not an action execution condition of a geofence is satisfied according to the determination result of the geofence. With respect to a geofence determined to satisfy the action execution condition, the controller 21 may execute the action specified by the action content. Outputting information related to the determination result of a geofence may include determining whether or not the action execution condition is satisfied and executing an action of the geofence satisfying the action execution condition. **In** one example, when the geofence definition data 32 is constituted of the main body data 301, the action data 303, and the geometry data 305, the processing related to the execution of the action may be constituted of the processing of the third step and the fourth step of the reference procedure during an inside/outside determination described above. Once output of the information is completed, the controller 21 advances processing to a next step S506.

### (Step S506)

In step S506, the controller 21 determines whether or not processing is to be ended. A determination criteria may be arbitrarily set. In one example, the controller 21 may determine not to end the processing until an end instruction is given. On the other hand, when an end instruction is given, the controller 21 may determine to end the processing. For example, the end instruction may be given by any method such as terminating/suspending the application or stopping the apparatus.

When the controller 21 determines not to end the processing, the controller 21 returns processing to step S501 and once again executes processing from step S501. Accordingly, the controller 21 may continuously execute the inside/outside determinations with respect to geofences defined by the held geofence definition data 32. On the other hand, when the controller 21 determines to end the processing, the controller 21 ends the processing procedure related to the inside/outside determination of geofences according to the present operation example. Note that the timing of ending the processing need not be limited to such an example. The controller 21 may end the processing procedure related to the inside/outside determinations of geofences at any timing. In addition, in one example, the controller 21 may execute the series of processing of step S501 to step S506 in real-time.

### [Features]

In the present embodiment, the geofence definition data 30 is managed on a per-zone basis on the map. Accordingly, in step S202 described above, the server apparatus 1 can extract the geofence definition data 31 to be delivered to the client apparatus 2 in accordance with zones (first zone P1 and second zone P2) without having to calculate a distance between the current position 40 of the client apparatus 2 and the geofence. Therefore, according to the present embodiment, a reduction in the processing load on the server apparatus 1 with respect to information processing related to geofences can be expected.

### [4 Modifications]

While the embodiment of the present disclosure has been described using specific terms, the forgoing description is in all respects merely illustrative of the disclosure. The processing steps and means described in the present disclosure may be freely combined and implemented insofar as no technical contradictions arise. In addition, various improvements or modifications may be made as appropriate in the embodiment described above. For example, the following modifications can be made. Hereinafter, similar components to those in the embodiment described above will be denoted by similar reference signs and descriptions of similar points to the embodiment described above will be omitted as appropriate. The modifications described below can be appropriately combined with one another.

In the embodiment described above, the client apparatus 2 acquires the current position 40 and requests the server apparatus 1 to provide the geofence definition data 31 in accordance with the acquired current position 40 (step S101 and step S102). However, a position to be a reference for requesting the provision of the geofence definition data 31 need not be limited to the current position 40. In another example, the output device 25 of the client apparatus 2 may include a display and the controller 21 of the client apparatus 2 may display a map on the display according to the map data MP. The controller 21 may draw a geofence on the map displayed on the display according to the rendering information in the held geofence definition data 32. In this case, the controller 21 may accept a reference to any position (such as a destination) other than the current position on the map in response to an operation of the input device 24 by the user. In response thereto, the controller 21 may request the server apparatus 1 to provide geofence definition data by replacing the current position 40 described above with the arbitrary reference position and transmitting reference position information indicating the reference position to the server apparatus 1. The reference position information during the request may be configured in a similar manner to the current position information 45 described above with the exception of replacing the current position 40 with the reference position. The server apparatus 1 may provide the client apparatus 2 with geofence definition data associated with at least one of a zone to which the reference position belongs and zones in a periphery of the zone by executing processing similar to step S201 to step S203 described above with the exception of replacing the current position 40 with the reference position. The client apparatus 2 may render the geofence installed at the reference position and in the periphery thereof on the map by using the received geofence definition data.

### [5 Supplement]

The processing steps and means described in the present disclosure may be freely combined and implemented insofar as no technical contradictions arise.

In addition, processing described as being performed by one apparatus may be shared and executed by a plurality of apparatuses. Alternatively, processing described as being performed by different apparatuses may be executed by one apparatus. In a computer system, what kind of hardware configuration is used to realize each function can be changed in a flexible manner.

The present disclosure can also be realized by supplying a computer program implementing the functions described in the above embodiment to a computer and having one or more processors of the computer read and execute the program. Such a computer program may be provided to the computer by a non-transitory computer-readable storage medium that can be connected to a system bus of the computer or may be provided to the computer over a network. The non-transitory computer-readable storage medium may include, for example, any type of disk, a read-only memory (ROM), a random access memory (RAM), an EPROM, an EEPROM, a magnetic card, a flash memory, an optical card, a semiconductor drive, and any type of media suitable for storing electronic instructions. The disk may include, for example, a magnetic disk and an optical disk. The magnetic disk may include, for example, a hard disk drive (HDD). The optical disk may include, for example, a CD-ROM, a DVD disk, and a Blu-ray Disc. The semiconductor drive may include, for example, a solid state drive.

## Claims

1. A server apparatus (1) comprising a controller (11) and configured to be capable of accessing a database (3) of geofence definition data (30), wherein
the geofence definition data(30) is configured to indicate a definition of a geofence and is associated with a zone on a map to which the defined geofence belongs, and
the controller (11) is configured to execute:
receiving current position information (45) related to a current position (40) of a client apparatus (2) from the client apparatus (2);
extracting geofence definition data (31) associated with at least one of a first zone (P1) to which the current position (40) belongs and a second zone (P2) that exists in a periphery of the first zone (P1) from the database (3) according to the current position information (45); and
returning the extracted geofence definition data (31) to the client apparatus (2).

2. The server apparatus (1) according to claim 1, wherein
receiving the current position information (45) includes receiving a list (455) of geofence definition data (32) held by the client apparatus (2), and
returning the extracted geofence definition data (31) is constituted of:
excluding geofence definition data (311) registered on the list (455) from the geofence definition data (310) extracted from the database (3); and
returning geofence definition data (315) that remains after excluding the geofence definition data (311) registered on the list (455).

3. The server apparatus (1) according to claim 2, wherein
the list (455) includes an acquisition time of the geofence definition data (32) by the client apparatus (2), and
excluding geofence definition data (311) registered on the list (455) from the extracted geofence definition data (310) is constituted of:
determining whether or not the geofence definition data registered on the list (455) has been updated according to the acquisition time; and
not excluding geofence definition data (312) determined to be updated and excluding geofence definition data (311) determined not to be updated in the geofence definition data registered on the list (455) from the extracted geofence definition data (310).

4. The server apparatus (1) according to claim 1, wherein
a priority is specified for the geofence definition data (30, 31), and
returning the extracted geofence definition data (31) to the client apparatus (2) includes preferentially returning geofence definition data with a high priority.

5. The server apparatus (1) according to claim 4, wherein
the priority is specified according to a static attribute of a geofence.

6. The server apparatus (1) according to claim 4, wherein
the priority is specified according to a dynamic attribute of a geofence.

7. The server apparatus (1) according to claim 4, wherein
receiving the current position information (45) includes receiving the number of requests (49) for geofence definition data (31), and
returning the extracted geofence definition data (31) to the client apparatus (2) is constituted of returning, to the client apparatus (2), pieces of geofence definition data (319) corresponding to the number of requests (49) starting from the geofence definition data with the highest priority in the extracted geofence definition data (310).

8. The server apparatus (1) according to claim 7, wherein
the number of requests (49) is determined according to a free space of a memory resource of the client apparatus (2).

9. An information processing method to be executed by a server apparatus (1), wherein
the server apparatus (1) is capable of accessing a database (3) of geofence definition data (30),
the geofence definition data (30) is configured to indicate a definition of a geofence and is associated with a zone on a map to which the defined geofence belongs, and
the information processing method includes:
receiving current position information (45) related to a current position (40) of a client apparatus (2) from the client apparatus (2);
extracting geofence definition data (31) associated with at least one of a first zone (P1) to which the current position (40) belongs and a second zone (P2) that exists in a periphery of the first zone (P1) from the database (3) according to the current position information (45); and
returning the extracted geofence definition data (31) to the client apparatus (2).

10. The information processing method according to claim 9, wherein
receiving the current position information (45) includes receiving a list (455) of geofence definition data (32) held by the client apparatus (2), and
returning the extracted geofence definition data (31) is constituted of:
excluding geofence definition data (311) registered on the list (455) from the geofence definition data (310) extracted from the database (3); and
returning geofence definition data (315) that remains after excluding the geofence definition data (311) registered on the list (455).

11. The information processing method according to claim 10, wherein
the list (455) includes an acquisition time of the geofence definition data (32) by the client apparatus (2), and
excluding geofence definition data (311) registered on the list (455) from the extracted geofence definition data (310) is constituted of:
determining whether or not the geofence definition data registered on the list (455) has been updated according to the acquisition time; and
not excluding geofence definition data (312) determined to be updated and excluding geofence definition data (311) determined not to be updated in the geofence definition data registered on the list (455) from the extracted geofence definition data (310).

12. The information processing method according to claim 9, wherein
a priority is specified for the geofence definition data (30, 31), and
returning the extracted geofence definition data (31) to the client apparatus (2) includes preferentially returning geofence definition data with a high priority.

13. The information processing method according to claim 12, wherein
receiving the current position information (45) includes receiving the number of requests (49) for geofence definition data (31), and
returning the extracted geofence definition data (31) to the client apparatus (2) is constituted of returning, to the client apparatus (2), pieces of geofence definition data (319) corresponding to the number of requests (49) starting from the geofence definition data with the highest priority in the extracted geofence definition data (310).

14. The information processing method according to claim 13, wherein
the number of requests (49) is determined according to a free space of a memory resource of the client apparatus (2).

15. A system (S), comprising:
a server apparatus (1); and
a client apparatus (2), wherein
the server apparatus (1) is capable of accessing a database (3) of geofence definition data (30),
the geofence definition data (30) is configured to indicate a definition of a geofence and is associated with a zone on a map to which the defined geofence belongs,
the client apparatus (2) is configured to execute:
acquiring a current position (40) as measured by a positioning module (26); and
transmitting current position information (45) related to the acquired current position (40) to the server apparatus (1), and
the server apparatus (1) is configured to execute:
receiving the current position information (45) from the client apparatus (2);
extracting geofence definition data (31) associated with at least one of a first zone (P1) to which the current position (40) belongs and a second zone (P2) that exists **in** a periphery of the first zone (P1) from the database (3) according to the current position information (45); and
returning the extracted geofence definition data (31) to the client apparatus (2).
